(19) Europäisches Patentamt
European Patent Office
Office européen des brevets

(11) **EP 4 729 550 A1**

(12) **EUROPEAN PATENT APPLICATION**
published in accordance with Art. 153(4) EPC

(43) Date of publication:
**22.04.2026 Bulletin 2026/17**

(21) Application number: **24823274.6**

(22) Date of filing: **04.06.2024**

(51) International Patent Classification (IPC):
***C08C 19/20*** *(2006.01)* ***C08F 8/34*** *(2006.01)*
***C08F 36/06*** *(2006.01)* ***C08L 9/00*** *(2006.01)*
***C08L 47/00*** *(2006.01)*

(52) Cooperative Patent Classification (CPC):
**C08C 19/20; C08F 8/34; C08F 36/06; C08L 9/00; C08L 47/00**

(86) International application number:
**PCT/JP2024/020400**

(87) International publication number:
**WO 2024/257655 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.06.2023 JP 2023099438**

(71) Applicant: **Kuraray Co., Ltd.**
**Kurashiki-shi, Okayama 710-0801 (JP)**

(72) Inventors:
- **TAKASAKI, Tomoe**
  **Kamisu-shi, Ibaraki 314-0197 (JP)**
- **KANBARA, Hiroshi**
  **Kamisu-shi, Ibaraki 314-0197 (JP)**
- **UEHARA, Yosuke**
  **Kamisu-shi, Ibaraki 314-0197 (JP)**
- **INATOMI, Atsushi**
  **Tsukuba-shi, Ibaraki 305-0841 (JP)**
- **MA, Zhaoming**
  **Tsukuba-shi, Ibaraki 305-0841 (JP)**

(74) Representative: **Müller-Boré & Partner Patentanwälte PartG mbB**
**Friedenheimer Brücke 21**
**80639 München (DE)**

(54) **MODIFIED LIQUID DIENE POLYMER AND ADDITIVE FOR RUBBER**

(57) The present invention relates to a modified liquid diene polymer comprising a structural unit derived from butadiene, wherein
the modified liquid diene polymer has a weight average molecular weight of 4,000 to 150,000,
has a modifying group represented by formula (I):

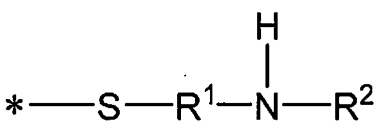

(I)

wherein
$R^1$ represents an alkylene group having 1 to 10 carbon atoms or a phenylene group,
$R^2$ represents a hydrogen atom or an alkyl group having 1 to 2 carbon atoms, and
* represents a bond,
an amount of the structural unit derived from butadiene is 20 to 100 mass% relative to a total amount of the modified liquid diene polymer, and an amount of a 1,2-bond unit having a vinyl group is 0 to 70 mol% relative to a total amount of the structural unit derived from butadiene.

EP 4 729 550 A1

## Description

TECHNICAL FIELD

The present invention relates to a modified liquid diene polymer and an additive for rubber.

BACKGROUND ART

Conventionally, rubber compositions having mechanical strength improved by blending fillers such as silica and carbon black with rubber components such as natural rubber and styrene butadiene rubber are widely used for tire applications requiring abrasion resistance and mechanical strength. It has been pointed out that the dispersion state of the filler in a crosslinked product of the filled rubber composition may affect physical properties (for example, wet grip and abrasion resistance) of the crosslinked product.
As a means for improving filler dispersibility in a rubber composition, various methods involving the use of a liquid rubber having a functional group have been studied (see, for example, Patent Documents 1 to 3).

PRIOR ART DOCUMENTS

PATENT DOCUMENTS

Patent Document 1: JP-A-2000-344949
Patent Document 2: JP-A-2013-249359
Patent Document 3: WO 2019/172185 A

SUMMARY OF THE INVENTION

PROBLEMS TO BE SOLVED BY THE INVENTION

Conventionally, a means for improving the dispersibility of a component in a rubber composition has been studied, and the use of a liquid rubber having a functional group has also been reported. In some cases, however, the effect of improving the dispersibility is insufficient. In addition, when a liquid rubber is added to improve the dispersibility of a component in a rubber composition, stability may deteriorate due to the occurrence of bleeding out of the liquid rubber.
Therefore, an object of the present invention is to provide a modified liquid diene polymer having an effect of improving the dispersibility of a component other than itself when added to a rubber composition and having a bleeding-out inhibition effect.

SOLUTIONS TO THE PROBLEMS

The present inventors conducted detailed studies in order to solve the above problems, and have accomplished the present invention. That is, the present invention includes the following preferred embodiments.

[1] A modified liquid diene polymer comprising a structural unit derived from butadiene, wherein

the modified liquid diene polymer has a weight average molecular weight of 4,000 to 150,000,
has a modifying group represented by formula (I):

[Chem. 1]

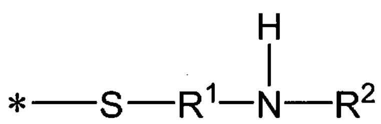

(I)

wherein
$R^1$ represents an alkylene group having 1 to 10 carbon atoms or a phenylene group,

$R^2$ represents a hydrogen atom or an alkyl group having 1 to 2 carbon atoms, and
* represents a bond,
an amount of the structural unit derived from butadiene is 20 to 100 mass% relative to a total amount of the modified liquid diene polymer, and an amount of a 1,2-bond unit having a vinyl group is 0 to 70 mol% relative to a total amount of the structural unit derived from butadiene.

[2] The modified liquid diene polymer according to [1], wherein an average number of the modifying group represented by the formula (I) is 0.5 to 10 per molecule of the modified liquid diene polymer.
[3] The modified liquid diene polymer according to [1] or [2], wherein the modified liquid diene polymer has no hydroxy group at an end thereof.
[4] The modified liquid diene polymer according to any one of [1] to [3], wherein an amount of a cis-1,4-bond unit relative to a total amount of 1,4-bond units in the structural unit derived from butadiene is 20 to 60 mol%.
[5] The modified liquid diene polymer according to any one of [1] to [4], wherein an amount of a trans-1,4-bond unit relative to a total amount of 1,4-bond units in the structural unit derived from butadiene is 30 to 80 mol%.
[6] The modified liquid diene polymer according to any one of [1] to [5], wherein the modified liquid diene polymer has a molecular weight distribution of 1.0 to 20.0.
[7] An additive for rubber, the additive comprising the modified liquid diene polymer according to any one of [1] to [6].
[8] The additive for rubber according to [7], the additive further comprising at least one selected from the group consisting of a plasticizer, an oxidation inhibitor, a filler, and a colorant.
[9] The additive for rubber according to [7] or [8], the additive being an additive for a solid rubber.

EFFECTS OF THE INVENTION

According to the present invention, it is possible to provide a modified liquid diene polymer having an effect of improving the dispersibility of components in a rubber composition, for example, blending components such as a plasticizer, an oxidation inhibitor, a filler, and a colorant, and having a bleeding-out inhibition effect when added to a rubber composition.

BRIEF DESCRIPTION OF THE DRAWINGS

Fig. 1 is a diagram showing images for dispersibility evaluation for Example 3 and Comparative Example 2.

DETAILED DESCRIPTION

Hereinafter, embodiments of the present invention will be described in detail. The scope of the present invention is not limited to the embodiments described herein, and various modifications can be made without departing from the spirit of the present invention. In addition, in the present description, a description of "x to y" (x and y each represent a number) representing a numerical range means "x or more and y or less".

(Modified liquid diene polymer)

The present invention provides a modified liquid diene polymer comprising a structural unit derived from butadiene, wherein

the modified liquid diene polymer has a weight average molecular weight of 4,000 to 150,000,
has a modifying group represented by formula (I):

[Chem. 2]

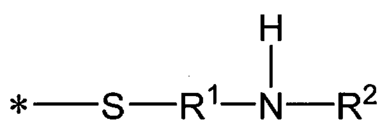

(I)

wherein
$R^1$ represents an alkylene group having 1 to 10 carbon atoms or a phenylene group,
$R^2$ represents a hydrogen atom or an alkyl group having 1 to 2 carbon atoms, and

* represents a bond,
an amount of the structural unit derived from butadiene is 20 to 100 mass% relative to a total amount of the modified liquid diene polymer, and an amount of a 1,2-bond unit having a vinyl group is 0 to 70 mol% relative to a total amount of the structural unit derived from butadiene.

The modified liquid diene polymer of the present invention is a polymer comprising a structural unit derived from butadiene, and also is a polymer that is modified with a modifying group represented by the formula (I) and is liquid at room temperature (25°C).

The amount of the structural unit derived from butadiene in the modified liquid diene polymer is 20 to 100 mass% relative to the total amount of the modified liquid diene polymer. When the amount of the structural unit derived from butadiene is 20 mass% or more, there are sufficient modification points, and a decrease in the productivity of the modified liquid diene polymer can be suppressed. The amount of the structural unit derived from butadiene is preferably 30 to 100 mass%, more preferably 35 to 100 mass%, still more preferably 40 to 100 mass%, and further preferably 50 to 100 mass% relative to the total amount of the modified liquid diene polymer.

The amount of the structural unit derived from butadiene can also be calculated from the measurement of $^{1}$H-NMR or $^{13}$C-NMR, or the amount of the butadiene monomer in the monomer mixture used for producing the modified liquid diene polymer.

The structural unit derived from butadiene is not particularly limited as long as it is a structural unit derived from 1,3-butadiene, which is a monomer. Examples thereof include a 1,2-bond unit, a 1,4-bond unit (cis-1,4-bond unit and trans-1,4-bond unit), and a structural unit in which a modifying group is bonded to any of these bond units. Here, each of the 1,2-bond unit, the cis-1,4-bond unit, and the trans-1,4-bond unit has a vinyl group in a structural unit derived from butadiene. Examples of the structural unit in which a modifying group is bonded to any of these bond units include a structural unit obtained by bonding a modifying group to a moiety derived from a vinyl group in a 1,2-bond unit. The structural unit does not have a vinyl group.

The amount of the 1,2-bond unit having a vinyl group relative to the total amount of the structural unit derived from butadiene is 0 to 70 mol%. When the amount of the 1,2-bond unit having a vinyl group is 70 mol% or less, it is possible to inhibit the viscosity of the modified liquid diene polymer from becoming excessively high and to suppress deterioration in handleability. The amount of the 1,2-bond unit having a vinyl group is preferably 5 to 70 mol%, and more preferably 5 to 68 mol%. The amounts of the 1,2-bond unit having a vinyl group, the 1,4-bond unit, the cis-1,4-bond unit, and the trans-1,4-bond unit to be described later can be measured by $^{1}$H-NMR and infrared absorption spectrum, and specifically can be measured by the methods described in Examples.

The structural units derived from butadiene preferably include a structural unit obtained by bonding a modifying group represented by the formula (I) to a moiety derived from the vinyl group in the 1,2-bond unit. The amount of the structural unit is preferably 0.1 to 15 mol%, more preferably 1 to 10 mol%, and still more preferably 2 to 9 mol% with respect to the total amount of the structural units derived from butadiene. The amount of the structural unit can be calculated from the molecular weight of each monomer constituting the modified liquid diene polymer, the weight average molecular weight of the modified liquid diene polymer, the approximate value of the number of monomers constituting the modified liquid diene polymer, the approximate value of the number of each bond unit, and the average number of the contained modifying groups determined as described above.

The amount of the 1,4-bond unit relative to the total amount of the structural units derived from butadiene is preferably 30 to 100 mol%, more preferably 30 to 95 mol%, and still more preferably 32 to 95 mol% with respect to the total amount of the structural units derived from butadiene from the viewpoint of handleability and the manufacturability of the polymer having the modifying group represented by the formula (I).

In one embodiment of the present invention, the amount of a cis-1,4-bond unit relative to the total amount of the 1,4-bond units in the structural units derived from butadiene is preferably 20 to 60 mol%, and more preferably 30 to 50 mol%.

In one embodiment of the present invention, the amount of a trans-1,4-bond unit relative to the total amount of the 1,4-bond units in the structural units derived from butadiene is preferably 30 to 80 mol%, more preferably 40 to 80 mol%, and still more preferably 50 to 70 mol%.

The modified liquid diene polymer has a weight average molecular weight of 4,000 to 150,000. The weight average molecular weight of the modified liquid diene polymer is preferably 4,000 to 140,000, more preferably 4,500 to 135,000, still more preferably 4,500 to 125,000, further preferably 4,500 to 100,000, and particularly preferably 4,500 to 50,000 from the viewpoint of retaining fluidity. In the present invention, the weight average molecular weight of a liquid diene polymer is a polystyrene equivalent weight average molecular weight determined from gel permeation chromatography (GPC) measurement. When the weight average molecular weight of a liquid diene polymer is within the above range, the liquid diene polymer is easy to handle because it has a liquid form at room temperature, is superior in process flow efficiency during production, and has good economic efficiency. Here, it is known that the weight average molecular weight of the modified liquid diene polymer also affects the bleeding-out inhibition effect. The bleeding-out tends to be

reduced when the weight average molecular weight is increased. However, the weight average molecular weight of the modified liquid diene polymer may be adjusted to a desired range for various purposes required for the rubber composition. The modified liquid diene polymer of the present invention can exhibit a greater effect of reducing bleeding-out as compared with an unmodified liquid diene polymer having a similar weight average molecular weight.

The number average molecular weight of the modified liquid diene polymer is preferably 200 to 150,000, more preferably 900 to 135,000, still more preferably 2,000 to 125,000, further preferably 2,600 to 100,000, particularly preferably 2,600 to 50,000, and especially preferably 3,800 to 50,000 from the viewpoint of handleability such as stringing. The number average molecular weight of a liquid diene polymer can also be measured by gel permeation chromatography (GPC).

The molecular weight distribution (Mw/Mn) of the modified liquid diene polymer is preferably 1.0 to 20.0, more preferably 1.0 to 15.0, still more preferably 1.0 to 10.0, further preferably 1.0 to 5.0, particularly preferably 1.0 to 2.0, especially preferably 1.0 to 1.5, and extremely preferably 1.0 to 1.3. The fact that Mw/Mn is within the above range is preferable in that the variation in viscosity of the modified liquid diene polymer to be obtained is small. The molecular weight distribution (Mw/Mn) means the ratio of weight average molecular weight (Mw) to number average molecular weight (Mn) determined by GPC measurement relative to polystyrene standards.

The modified liquid diene polymer has a modifying group represented by formula (I):

[Chem. 3]

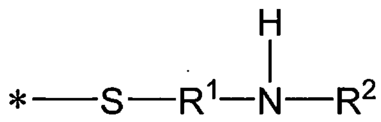

(I)

wherein

- $R^1$ represents an alkylene group having 1 to 10 carbon atoms or a phenylene group,
- $R^2$ represents a hydrogen atom or an alkyl group having 1 to 2 carbon atoms, and
- * represents a bond. Hereinafter, the modifying group is also referred to as a modifying group (I). The modified liquid diene polymer may be modified with one type of the modifying group represented by the formula (I) or may be modified with two or more types of the modifying group represented by the formula (I).

$R^1$ in the formula (I) represents an alkylene group having 1 to 10 carbon atoms or a phenylene group.

Examples of the alkylene group having 1 to 10 carbon atoms include a methylene group, an ethylene group, a propylene group, a butylene group, a pentylene group, a hexylene group, a heptylene group, an octylene group, a nonylene group, and a decylene group. The alkylene group may be either linear or branched. The number of the carbon atoms in the alkylene group is preferably 1 to 10, and more preferably 2 to 6. The phenylene group is a divalent group having two bonds on the phenyl ring, and the two bonds may be in any of ortho positions, meta positions, and para positions with respect to each other. The phenylene group may be a group in which at least one hydrogen atom bonded to a carbon atom on the phenyl ring is replaced by an alkyl group having 1 to 4 carbon atoms.

$R^1$ in the formula (I) is preferably an alkylene group having 2 to 6 carbon atoms from the viewpoint of improving the dispersibility of additives such as a filler.

$R^2$ in the formula (I) represents a hydrogen atom or an alkyl group having 1 to 2 carbon atoms. The alkyl group having 1 to 2 carbon atoms is a methyl group or an ethyl group.

$R^2$ in the formula (I) is preferably a hydrogen atom from the viewpoint of interaction or reactivity between additives such as a filler and the modified liquid diene polymer.

**[0030]** * in the formula (I) represents a bond. It is considered that the bond is preferably bonded to a structural unit derived from butadiene of the modified liquid diene polymer, more preferably bonded to a moiety derived from a vinyl group of a 1,4-bond unit or a moiety derived from a vinyl group of a 1,2-bond unit, still more preferably bonded to a moiety derived from a vinyl group of a 1,2-bond unit, and further preferably bonded to a moiety derived from a side chain vinyl group of a 1,2-bond unit. Therefore, it is considered that the modifying group represented by the formula (I) is preferably contained in a side chain of the diene polymer. When * is bonded to a moiety derived from a side chain vinyl group, it is considered that the side chain vinyl group and a compound that provides a modifying group represented by the formula (I) are reacted and bonded, and it is considered that the side chain vinyl group has been converted into a single bond (alkylene group) due to the bonding of the modifying group.

The structure of the modifying group represented by the formula (I) can be analyzed from, for example, a structure analysis of a resulting polymer by NMR analysis, a structure of the modifying compound used in synthesizing the polymer,

and the like.

The average number of the contained modifying groups represented by the formula (I) is preferably 0.5 to 10, more preferably 0.5 to 7, still more preferably 0.5 to 5, further preferably 1 to 5, and particularly preferably 1 to 4.5 per molecule of the modified liquid diene polymer from the viewpoint of inhibiting bleeding-out of the modified liquid diene polymer and the like, improving the affinity with additives such as a filler, and improving the dispersibility of the additives. The average number of the contained modifying groups represented by the formula (I) can be determined by $^1$H-NMR.

The amount of the structural unit derived from butadiene in the modified liquid diene polymer is 20 to 100 mass% relative to the total amount of the modified liquid diene polymer. When the amount of the structural unit derived from butadiene is 20 mass% or more, there are an increased number of modification points, and a decrease in the productivity of the modified liquid diene polymer can be suppressed. As long as the amount of the structural unit derived from butadiene is within the above range, the modified liquid diene polymer may be either a homopolymer of butadiene or a copolymer with another monomer copolymerizable with butadiene, for example, a conjugated diene monomer other than butadiene, an aromatic vinyl compound, or the like. Therefore, the modified liquid diene polymer may have only a structural unit derived from butadiene or may have a structural unit derived from a conjugated diene monomer other than butadiene, a structural unit derived from an aromatic vinyl compound, and the like in addition to a structural unit derived from butadiene.

Examples of the conjugated diene monomer other than butadiene include isoprene and β-farnesene, and the conjugated diene monomer other than butadiene is preferably at least one selected from the group consisting of isoprene and β-farnesene, and more preferably isoprene. Examples of the aromatic vinyl compound include styrene. The amount of the structural unit derived from a conjugated diene monomer other than butadiene, for example, derived from isoprene is preferably 0 to 80 mass%, more preferably 0 to 65 mass%, and still more preferably 0 to 50 mass% relative to the total amount of the modified liquid diene polymer.

In one embodiment of the present invention, the total amount of the structural unit derived from butadiene and the structural unit derived from a conjugated diene monomer other than butadiene in the modified liquid diene polymer is preferably 80 to 100 mass%, more preferably 90 to 100 mass%, and still more preferably 95 to 100 mass% relative to the total amount of the modified liquid diene polymer.

When the modified liquid diene polymer is a copolymer of butadiene and another monomer copolymerizable with butadiene, the copolymer may be either a random copolymer or a block copolymer.

The modified liquid diene polymer preferably has no hydroxy group at an end thereof from the viewpoint of reactivity with the modifying group (I). Whether or not the polymer has a hydroxy group at an end thereof can be confirmed by neutralization titration of hydroxyl value of JIS K 0070-1992, infrared absorption spectrum (IR), and $^1$H-NMR.

The modified liquid diene polymer as described above has an effect of improving the dispersibility of additives such as a filler, and has a bleeding-out inhibition effect when added to a rubber composition, and thus it is possible to sufficiently disperse additives such as a filler while maintaining the stability of the rubber composition. Therefore, the modified liquid diene polymer can be suitably blended in any rubber composition comprising a dispersion of a filler or the like. Therefore, the modified liquid diene polymer of the present invention is preferably used as an additive for rubber.

(Method for producing modified liquid diene polymer)

The method for producing the modified liquid diene polymer described above is not particularly limited, but for example, it is preferable to produce an unmodified liquid diene polymer by polymerizing butadiene and another monomer that is comprised as necessary and can be copolymerized with butadiene, for example, by a solution polymerization process, and then react the unmodified liquid polymer with a modifying compound to produce a modified liquid diene polymer.

The solution polymerization process that can be applied may be a publicly-known process or a process that is deemed as publicly-known. For example, monomers including butadiene are polymerized in a solvent with a Ziegler catalyst, a metallocene catalyst, or an active metal or an active metal compound capable of catalyzing anionic polymerization, optionally in the presence of a polar compound.

Examples of the solvent include aliphatic hydrocarbons such as n-butane, n-pentane, isopentane, n-hexane, n-heptane, and isooctane; alicyclic hydrocarbons such as cyclopentane, cyclohexane, and methylcyclopentane; and aromatic hydrocarbons such as benzene, toluene, and xylene.

Examples of the active metal capable of catalyzing anionic polymerization include alkali metals such as lithium, sodium and potassium; alkaline earth metals such as beryllium, magnesium, calcium, strontium and barium; and lanthanoid rare earth metals such as lanthanum and neodymium. Of the active metals capable of catalyzing anionic polymerization, alkali metals and alkaline earth metals are preferable, and alkali metals are more preferable.

Preferred active metal compounds capable of catalyzing anionic polymerization are organoalkali metal compounds. Examples of the organoalkali metal compounds include organomonolithium compounds such as methyllithium, ethyllithium, n-butyllithium, sec-butyllithium, t-butyllithium, hexyllithium, phenyllithium and stilbenelithium; polyfunctional organolithium compounds such as dilithiomethane, dilithionaphthalene, 1,4-dilithiobutane, 1,4-dilithio-2-ethylcyclohexane and 1,3,5-trilithiobenzene; sodium naphthalene and potassium naphthalene. Of these organoalkali metal compounds, organolithium compounds are preferable, and organomonolithium compounds are more preferable.

The amount of the organoalkali metal compound used may be determined appropriately according to the melt viscosity, the molecular weight, and the like of the modified liquid diene polymer. Usually, the organoalkali metal compound is used in an amount of 0.01 to 3 parts by mass per 100 parts by mass of all the monomers.

The organoalkali metal compound may also be used in the form of an organoalkali metal amide derived by subjecting the organoalkali metal compound to a reaction with a secondary amine such as dibutylamine, dihexylamine or dibenzylamine.

The polar compound is used in anionic polymerization usually for adjusting the microstructure (for example, the vinyl content) of the unmodified liquid diene polymer without deactivating the reaction. Examples of the polar compound include ether compounds such as dibutyl ether, tetrahydrofuran, and ethylene glycol diethyl ether; tertiary amines such as tetramethylethylenediamine and trimethylamine; alkali metal alkoxides and phosphine compounds. The polar compound is usually used in an amount of 0.01 to 1000 mol per mole of the organoalkali metal compound.

The temperature of the solution polymerization is usually in the range of -80 to 150°C, preferably in the range of 0 to 100°C, and more preferably in the range of 10 to 90°C. The polymerization mode may be either batchwise or continuous.

The polymerization reaction can be stopped by adding a polymerization terminator. Examples of the polymerization terminator include alcohols such as methanol and isopropanol. The unmodified liquid diene polymer can be isolated by pouring the resulting polymerization reaction liquid into a poor solvent such as methanol to precipitate the unmodified liquid diene polymer, or by washing the polymerization reaction liquid with water followed by separation and subsequent drying.

The thus-obtained unmodified liquid diene polymer may be directly (without being subjected to hydrogenation) reacted with a compound that provides a functional group represented by formula (I) to perform modification. Alternatively, the obtained unmodified liquid diene polymer may be reacted, after hydrogenation of at least a part of unsaturated bonds comprised in the unmodified liquid diene polymer, with a compound that provides a functional group represented by formula (I) to perform modification.

From the viewpoint of allowing the properties of the modifying group represented by the formula (I) to be exhibited in a more preferable state, the unmodified liquid diene polymer is preferably not modified with a functional group, such as a hydroxy group. When the unmodified liquid diene polymer is free from modification with other functional groups, the resulting modified liquid diene polymer tends to attain higher stability. In addition, higher interaction (for example, reactivity) with the filler (for example, silica) of the functional group represented by the formula (I) comprised in the modified liquid diene polymer tends to be exhibited.

A modified liquid diene polymer modified by a modifying group represented by the above formula (I) can be produced by reacting an unmodified liquid diene polymer with, for example, a compound represented by formula (II):

[Chem. 4]

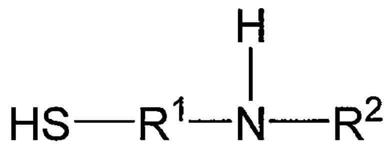

(II)

wherein $R^1$ and $R^2$ in the formula (II) have the same meaning as $R^1$ and $R^2$ in the formula (I), respectively (hereinafter also referred to as compound (II)). The unmodified liquid diene polymer may be reacted with one compound (II) or alternatively may be reacted with two or more compounds (II).

The mercapto group (-SH) of the compound (II) undergoes a radical addition reaction with a carbon-carbon unsaturated bond comprised in the unmodified liquid diene polymer, whereby the functional group represented by the formula (I) is introduced into the polymer. At the time of this radical addition reaction, the radical addition reaction probably occurs preferentially at carbon-carbon unsaturated bonds in side chains comprised in 1,2-bonded butadiene units of the unmodified liquid diene polymer.

The definitions and examples of $R^1$ and $R^2$ in the formula (II) are the same as the definitions and examples of $R^1$ and $R^2$ in the formula (I). Examples of the specific compound represented by the formula (II) include 2-aminoethanethiol, 2-methylaminoethanethiol, 2-ethylaminoethanethiol, 2-dimethylaminoethanethiol, 2-diethylaminoethanethiol, p-aminothiophenol, p-methylaminothiophenol, and p-dimethylaminothiophenol.

The method for adding the compound represented by the formula (II) to the unmodified liquid diene polymer is not particularly limited, and for example, a method can be adopted in which the compound represented by the formula (II) and, as necessary, a radical catalyst are added to the unmodified liquid diene polymer, and the mixture is heated in the presence or absence of an organic solvent. The radical generator to be used is not particularly limited, and usually commercially

available organic peroxides, azo compounds, hydrogen peroxide, etc. can be used.

Examples of the organic peroxide include methyl ethyl ketone peroxide, cyclohexanone peroxide, 3,3,5-trimethylcyclohexanone peroxide, methylcyclohexanone peroxide, acetylacetone peroxide, 1,1-bis(t-butylperoxy)-3,3,5-trimethylcyclohexane, 1,1-bis(t-butylperoxy)cyclohexane, 1,1-bis(t-hexylperoxy)cyclohexane, 2,2-bis(t-butylperoxy)butane, t-butylhydroperoxide, cumenehydroperoxide, diisopropylbenzene hydroperoxide, p-menthane hydroperoxide, 2,5-dimethylhexane 2,5-dihydroperoxide, 1,1,3,3-tetramethylbutyl hydroperoxide, di-t-butyl peroxide, t-butylcumyl peroxide, dicumyl peroxide, bis(t-butylperoxyisopropyl)benzene, 2,5-dimethyl-2,5-di(t-butylperoxy)hexane, 2,5-hexanoyl peroxide, lauroyl peroxide, succinic acid peroxide, benzoyl peroxide and derivatives thereof, 2,4-dichlorobenzoyl peroxide, m-toluoyl peroxide, diisopropyl peroxydicarbonate, t-butyl-2-ethyl hexanoate, di-2-ethylhexyl peroxydicarbonate, dimethoxyisopropyl peroxycarbonate, di(3-methyl-3-methoxybutyl) peroxydicarbonate, t-butyl peroxyacetate, t-butyl peroxypivalate, t-butyl peroxyneodecanoate, t-butyl peroxyoctanoate, t-butyl peroxy-3,3,5-trimethylhexanoate, t-butyl peroxylaurate, t-butyl peroxycarbonate, t-butyl peroxybenzoate, t-butyl peroxyisobutyrate, n-butyl-4,4-di(t-butylperoxy)valerate, and t-hexyl peroxyisopropyl monocarbonate.

Examples of the azo compound include 2,2'-azobisisobutyronitrile, 1,1'-azobis(cyclohexane-1-carbonitrile), 2,2'-azobis(2-methylbutyronitrile), 2,2'-azobis(2,4-dimethylvaleronitrile), 2,2'-azobis(2,4-dimethyl-4-methoxyvaleronitrile), 2,2'-azobis(2-(2-imidazolin-2-yl)propane), 2,2'-azobis(2,4,4-trimethylpentane), 2,2'-azobis(2-methylpropane), 2,2'-azobis(2-hydroxymethylpropionitrile), 4,4'-azobis(4-cyanovaleric acid), dimethyl 2,2'-azobis(2-methylpropionate), 2-cyano-2-propylazoformamide, and 2-phenylazo-4-methoxy-2,4-dimethylvaleronitrile.

Examples of the organic solvent which is used in the above method generally include hydrocarbon solvents and halogenated hydrocarbon solvents. Among these organic solvents, hydrocarbon solvents such as n-butane, n-hexane, n-heptane, cyclohexane, benzene, toluene, and xylene are preferable.

Furthermore, when the reaction of adding a modifying compound is performed by the method described above, an antioxidant may be added from the viewpoint of, for example, suppressing side reactions.

Examples of preferable antioxidant to be used at this time include 2,6-di-t-butyl-4-methylphenol (BHT), 2,2'-methylenebis(4-methyl-6-t-butylphenol), 4,4'-thiobis(3-methyl-6-t-butylphenol), 4,4'-butylidenebis(3-methyl-6-t-butylphenol) (AO-40), 3,9-bis[1,1-dimethyl-2-[3-(3-t-butyl-4-hydroxy-5-methylphenyl)propionyloxy]ethyl]-2,4,8,10-tetraoxaspiro[5.5]undecane (AO-80), 2,4-bis[(octylthio)methyl]-6-methylphenol (Irganox1520L), 2,4-bis[(dodecylthio)methyl]-6-methylphenol (Irganox1726), 2-[1-(2-hydroxy-3,5-di-t-pentylphenyl)ethyl]-4,6-di-t-pentylphenyl acrylate (SumilizerGS), 2-t-butyl-6-(3-t-butyl-2-hydroxy-5-methylbenzyl)-4-methylphenyl acrylate (SumilizerGM), 6-t-butyl-4-[3-(2,4,8,10-tetra-t-butyldibenzo[d,f] [1,3,2]dioxaphosphepin-6-yloxy)propyl]-2-methylphenol (SumilizerGP), tris(2,4-di-t-butylphenyl) phosphite (Irgafos168), dioctadecyl 3,3'-dithiobispropionate, hydroquinone, p-methoxyphenol, N-phenyl-N'-(1,3-dimethylbutyl)-p-phenylenediamine (Nocrac 6C), bis(2,2,6,6-tetramethyl-4-piperidyl) sebacate (LA-77Y), N,N-dioctadecylhydroxylamine (IrgastabFS042), and bis(4-t-octylphenyl)amine (Irganox5057). These antioxidants may be used singly, or two or more of them may be used in combination.

The amount of the antioxidant added is preferably 0 to 10 parts by mass, and more preferably 0 to 5 parts by mass per 100 parts by mass of the unmodified liquid diene polymer.

In the modified liquid diene polymer, positions at which functional groups are introduced may be ends of the polymer chain or side chains of the polymer chain, but are preferably side chains of the polymer chain in view of the fact that a plurality of functional groups can be introduced easily. The functional groups may include either a single type of functional groups or two or more types of functional groups. Therefore, the modified liquid diene polymer may be one modified with a single type of modifying compound or one modified with two or more types of modifying compounds.

The ratio in which the unmodified liquid diene polymer and the modifying compound are mixed together may be selected appropriately so that, for example, the modified liquid diene polymer will have a desired average number of the functional groups per molecule. For example, the unmodified liquid diene polymer and the modifying compound (e.g., the compound (II)) may be mixed in a mass ratio (unmodified liquid diene polymer/modifying compound) of 0.3 to 50.

An approach effective for producing a modified liquid diene polymer having specified properties is to react the unmodified liquid diene polymer with the modifying compound (e.g., the compound (II)) by radical addition reaction at an appropriate reaction temperature for a sufficient amount of reaction time. For example, the temperature in the reaction of adding the modifying compound to the unmodified liquid diene polymer is preferably 10 to 200°C, and more preferably 50°C to 180°C. The reaction time is preferably 1 to 200 hours, more preferably 1 to 100 hours, and still more preferably 1 to 50 hours.

From the viewpoint of adjusting the melt viscosity, molecular weight distribution (Mw/Mn), and the like of the liquid diene polymer within the above ranges, it is preferable that a radical catalyst be added during the modification reaction and the reaction be performed at a low reaction temperature and in a short time.

(Additive for rubber)

In one preferred embodiment of the present invention, a modified liquid diene polymer is used in an additive for

rubber. The present invention also provides an additive for rubber, the additive including the modified liquid diene polymer described above. The additive for rubber may include only the modified liquid diene polymer, or may include the modified liquid diene polymer and other additives.

The other additives are not particularly limited, and may be, for example, a plasticizer, an oxidation inhibitor, a filler, or a colorant. In one preferred embodiment, the additive for rubber includes only a modified liquid diene polymer, or includes a modified liquid diene polymer and further includes at least one selected from the group consisting of a plasticizer, an oxidation inhibitor, a filler, and a colorant.

The amount of the modified liquid diene polymer comprised in the additive for rubber is also not particularly limited, and may be, for example, 50 to 100 mass%, 70 to 100 mass%, 80 to 100 mass%, or 90 to 100 mass% relative to the total amount of the additive for rubber. When other additives are further comprised, the amount of the modified liquid diene polymer may be 50 to 99 mass%, 70 to 97 mass%, 80 to 95 mass%, or the like relative to the total amount of the additives for rubber.

The additive for rubber is an additive to be used by being added to a rubber component. Examples of the rubber component include solid rubber. Therefore, the additive for rubber of the present invention is preferably an additive for a solid rubber. From the viewpoint of obtaining the effect of improving the dispersibility of a filler or the like, the additive for rubber is preferably used together with a filler.

Examples of the filler include inorganic fillers such as carbon black, silica, clays, mica, calcium carbonate, magnesium hydroxide, aluminum hydroxide, barium sulfate, titanium oxides, glass fibers, fibrous fillers, and glass balloons; and organic fillers such as resin particles, wood powders, and cork powders. When such a filler is used together with the modified liquid diene polymer of the present invention, it is possible to attain improvements in properties such as mechanical strength, heat resistance, and weather resistance, to control the hardness, and to increase the bulk of the rubber. From the viewpoint of, for example, improvement in properties such as enhancement of mechanical strength, carbon black and silica are preferable among the fillers (C) enumerated above. Such fillers (C) may be used singly, or two or more of them may be used in combination. The filler (C) is preferably at least one selected from the group consisting of carbon black and silica.

The content of the filler per 100 parts by mass of the solid rubber is preferably 0.5 to 200 parts by mass, more preferably 20 to 180 parts by mass, still more preferably 25 to 150 parts by mass, and further preferably 30 to 150 parts by mass. When the content of the filler is within the above range, processability, rolling resistance performance, mechanical strength, and abrasion resistance are improved.

Examples of the carbon black include furnace black, channel black, thermal black, acetylene black, and Ketjen black. From the viewpoint of enhancing the crosslinking rate and the mechanical strength, furnace black is preferable among these carbon blacks. These carbon blacks may be used singly, or two or more of them may be used in combination.

The average particle size of the carbon black is preferably 5 to 100 nm, more preferably 5 to 80 nm, still more preferably 5 to 70 nm, and further preferably 5 to 25 nm from the viewpoint of enhancing dispersibility, mechanical strength, hardness, and the like. The average particle size of the carbon black can be determined by measuring the diameters of particles with a transmission electron microscope and calculating the average value thereof.

Examples of commercially available products of furnace black include "DIABLACK" manufactured by Mitsubishi Chemical Corporation and "SEAST" manufactured by Tokai Carbon Co., Ltd. Examples of commercially available products of acetylene black include "DENKA BLACK" manufactured by Denka Company Limited. Examples of the commercially available Ketjen blacks include "ECP600JD" manufactured by Lion Corporation.

To attain enhancements in properties such as the wettability and dispersibility to the solid rubber, the carbon black may be treated with acids such as nitric acid, sulfuric acid, hydrochloric acid and mixed acids of these acids, or may be subjected to surface oxidation treatment by heating in the presence of air. To enhance the mechanical strength of a crosslinked product, the carbon black may be heat treated at 2,000 to 3,000°C in the presence of a graphitization catalyst. As the graphitization catalyst, boron, boron oxides (for example, $B_2O_2$, $B_2O_3$, $B_4O_3$ and $B_4O_5$), boron oxoacids (for example, orthoboric acid, metaboric acid, and tetraboric acid) and salts thereof, boron carbides (for example, $B_4C$ and $B_6C$), boron nitride (BN) and other boron compounds are suitably used.

The carbon black can also be used after the particle size thereof is adjusted by a technique such as crushing. For crushing the carbon black, high-speed rotary crushers (hammer mill, pin mill, cage mill), various ball mills (rotary mill, vibration mill, and planetary mill), and stirring mills (bead mill, attritor, flow tube type mill, and annular mill), and the like can be used.

Examples of the silica include wet silica (hydrous silicate), dry silica (silicic anhydride), calcium silicate, and aluminum silicate. Of these silicas, wet silica is preferable to attain further enhancements in processability, mechanical strength, and abrasion resistance. These silicas may be used singly, or two or more of them may be used in combination.

To attain enhancements in processability, rolling resistance performance, mechanical strength, and abrasion resistance, the average particle size of the silicas is preferably 0.5 to 200 nm, more preferably 5 to 150 nm, still more preferably 10 to 100 nm, and further preferably 10 to 50 nm. The average particle size of the silica can be determined by measuring the diameters of particles with a transmission electron microscope and calculating the average value thereof.

The average particle size of aluminum hydroxide is preferably 5 to 20 nm, more preferably 5 to 15 nm, and still more preferably 5 to 10 nm. Resin microbeads are preferably added as a foaming agent. The average particle size of the resin microbeads is preferably 10 to 100 μm, and more preferably 15 to 90 μm.

(Rubber composition)

According to the present invention, a rubber composition including at least the modified liquid diene polymer of the present invention and a rubber component (preferably a solid rubber) is obtained.

The solid rubber (A) refers to a rubber that can be handled in a solid state at 20°C. The Mooney viscosity ML(1+4) of the solid rubber (A) at 100°C is usually 20 to 200. Examples of the solid rubber (A) include natural rubber, styrene butadiene rubber (hereinafter also referred to as "SBR"), butadiene rubber, isoprene rubber, butyl rubber, halogenated butyl rubber, ethylene propylene diene rubber, butadiene acrylonitrile copolymer rubber, chloroprene rubber, acrylic rubber, fluororubber, and urethane rubber. Among these solid rubbers (A), natural rubber, SBR, butadiene rubber, and isoprene rubber are preferable, and natural rubber and SBR are more preferable. These solid rubbers (A) may be used singly, or two or more of them may be used in combination.

From the viewpoint of making a resulting rubber composition and crosslinked product exhibit their properties sufficiently, the number average molecular weight (Mn) of the solid rubber (A) is preferably 80,000 or more, and more preferably within the range of 100,000 to 3,000,000. The number average molecular weight as referred to herein is a polystyrene equivalent number average molecular weight measured by gel permeation chromatography (GPC).

Examples of the natural rubber include natural rubbers commonly used in the tire industry, including technically specified rubbers (TSRs) such as SMRs (TSRs from Malaysia), SIRs (TSRs from Indonesia) and STRs (TSRs from Thailand), and ribbed smoked sheets (RSSs); high-purity natural rubbers; and modified natural rubbers such as epoxidized natural rubbers, hydroxylated natural rubbers, hydrogenated natural rubbers, and grafted natural rubbers. In particular, SMR 20, STR 20 and RSS #3 are preferable from the viewpoints of uniform quality and high availability. Such natural rubbers may be used singly, or two or more of them may be used in combination.

As the SBR, a general SBR used for tire applications can be used.
Specifically, SBR having a styrene content of 0.1 to 70 mass% is preferable, SBR having a styrene content of 5 to 50 mass% is more preferable, and SBR having a styrene content of 15 to 35 mass% is still more preferable. In addition, one having a vinyl content of 0.1 to 60 mass% is preferable, and one having a vinyl content of 0.1 to 55 mass% is more preferable. In the present description, the "vinyl content" in SBR means the proportion of a 1,2-bond contained in the butadiene structural units, and can be determined by measurement of $^1$H-NMR.

The weight average molecular weight (Mw) of SBR is preferably 100,000 to 2,500,000, more preferably 150,000 to 2,000,000, and still more preferably 200,000 to 1,500,000. Within the above range, both processability and mechanical strength can be satisfactorily attained. The weight average molecular weight as referred to herein is a polystyrene equivalent weight average molecular weight determined from gel permeation chromatography (GPC) measurement.

The glass transition temperature of the SBR determined by a differential thermal analysis method is preferably -95 to 0°C, and more preferably -95 to -5°C. By setting the glass transition temperature within the above range, the viscosity of the SBR can be set within a range in which the SBR is easily handled.

SBR is obtained by copolymerizing styrene and butadiene. The method for producing the SBR is not particularly limited, and any of an emulsion polymerization process, a solution polymerization process, a gas phase polymerization process, and a bulk polymerization process can be used. Among these production processes, an emulsion polymerization process and a solution polymerization process are preferable.

An emulsion-polymerized styrene butadiene rubber (hereinafter, also written as E-SBR) may be produced by a usual emulsion polymerization process that is known or is deemed as known. For example, it is obtained by emulsifying and dispersing prescribed amounts of styrene and butadiene monomers in the presence of an emulsifier and emulsion polymerizing the monomers with a radical polymerization initiator.

A solution-polymerized styrene butadiene rubber (hereinafter, also written as S-SBR) may be produced by a usual solution polymerization process. For example, it is obtained by polymerizing styrene and butadiene in a solvent with an active metal capable of catalyzing anionic polymerization optionally in the presence of a polar compound as desired.

Examples of the solvent include aliphatic hydrocarbons such as n-butane, n-pentane, isopentane, n-hexane, n-heptane and isooctane; alicyclic hydrocarbons such as cyclopentane, cyclohexane and methylcyclopentane; and aromatic hydrocarbons such as benzene and toluene. It is usually preferable to use these solvents in such an amount that the monomer concentration will be 1 to 50 mass%.

Examples of the active metal capable of catalyzing anionic polymerization include alkali metals such as lithium, sodium and potassium; alkaline earth metals such as beryllium, magnesium, calcium, strontium and barium; and lanthanoid rare earth metals such as lanthanum and neodymium. Of these active metals, alkali metals and alkaline earth metals are preferable, and alkali metals are more preferable. Of the alkali metals, organoalkali metal compounds are more preferably used.

Examples of the organoalkali metal compounds include organomonolithium compounds such as n-butyllithium, sec-butyllithium, t-butyllithium, hexyllithium, phenyllithium and stilbenelithium; polyfunctional organolithium compounds such as dilithiomethane, 1,4-dilithiobutane, 1,4-dilithio-2-ethylcyclohexane and 1,3,5-trilithiobenzene; sodium naphthalene and potassium naphthalene. In particular, organolithium compounds are preferable, and organomonolithium compounds are more preferable. The amount of the organoalkali metal compound used is determined appropriately according to the desired molecular weight of S-SBR. The organoalkali metal compound may also be used in the form of an organoalkali metal amide derived by subjecting the organoalkali metal compound to a reaction with a secondary amine such as dibutylamine, dihexylamine or dibenzylamine.

The polar compound is not particularly limited as long as the compound does not deactivate a reaction in anionic polymerization and is generally used for the purposes of controlling the microstructure of butadiene moieties and the distribution of styrene in copolymer chains. Examples thereof include ether compounds such as dibutyl ether, tetrahydrofuran, and ethylene glycol diethyl ether; tertiary amines such as tetramethylethylenediamine and trimethylamine; alkali metal alkoxides and phosphine compounds.

The temperature of the polymerization reaction is usually in the range of -80 to 150°C, preferably 0 to 100°C, and more preferably 30 to 90°C. The polymerization mode may be either batchwise or continuous. To enhance the random copolymerizability of styrene and butadiene, it is preferable to supply styrene and butadiene into the reaction liquid continuously or intermittently such that the composition ratio of styrene and butadiene in the polymerization system will fall within a specific range.

The polymerization reaction can be stopped by adding an alcohol such as methanol or isopropanol as a polymerization terminator. By separating the solvent from the polymerization solution after the stopping of the polymerization reaction by direct drying, steam stripping, or the like, it is possible to obtain the target S-SBR. The target S-SBR also may be obtained in the form of an oil-extended rubber by mixing the polymerization solution with an extender oil before the removal of the solvent.

As the SBR, a modified SBR obtained by introducing functional groups into SBR may be used as long as the effects of the present invention are not impaired. Examples of the functional group include an amino group, an alkoxysilyl group, a hydroxy group, an epoxy group, and a carboxyl group.

Examples of the method for producing a modified SBR include a method involving adding a coupling agent capable of reacting with a polymerization active end, such as tin tetrachloride, tetrachlorosilane, dimethyldichlorosilane, dimethyldiethoxysilane, tetramethoxysilane, tetraethoxysilane, 3-aminopropyltriethoxysilane, tetraglycidyl-1,3-bisaminomethylcyclohexane or 2,4-tolylene diisocyanate, a polymerization end modifier, such as 4,4'-bis(diethylamino)benzophenone or N-vinylpyrrolidone, or any of modifying agents described in JP-A-2011-132298 before adding a polymerization terminator. In the modified SBR, a position in the polymer where a functional group is introduced may be a polymer end or a side chain of a polymer chain.

Examples of the butadiene rubber that can be used include commercially available butadiene rubbers polymerized with Ziegler catalysts such as titanium tetrahalide-trialkylaluminum systems, diethylaluminum chloride-cobalt systems, trialkylaluminum-boron trifluoride-nickel systems and diethylaluminum chloride-nickel systems; lanthanoid rare earth metal catalysts such as triethylaluminum-organic acid neodymium-Lewis acid systems; or organoalkali metal compounds similarly to the S-SBRs. A butadiene rubber polymerized with a Ziegler catalyst is preferred because of its high cis content. Alternatively, a butadiene rubber having an ultrahigh cis content obtained using a lanthanoid rare earth metal catalyst may be used.

The vinyl content of the butadiene rubber is preferably 50 mass% or less, more preferably 40 mass% or less, and still more preferably 30 mass% or less from the viewpoint of improving rolling resistance performance. The lower limit of the vinyl content is not particularly limited. The glass transition temperature varies depending on the vinyl content, but is preferably -40°C or less, and more preferably -50°C or less.

The weight average molecular weight (Mw) of the butadiene rubber is preferably 90,000 to 2,000,000, and more preferably 150,000 to 1,500,000. When the Mw is in the above range, high processability and mechanical strength are obtained.

A part of the butadiene rubber may have a branched structure or polar functional groups introduced by using a polyfunctional modifier, such as a modifier like tin tetrachloride, silicon tetrachloride, an alkoxysilane having an epoxy group in the molecule, or an amino group-containing alkoxysilane as long as the effects of the present invention are not impaired.

Examples of the isoprene rubber that can be used include commercially available isoprene rubbers polymerized with Ziegler catalysts such as titanium tetrahalide-trialkylaluminum systems, diethylaluminum chloride-cobalt systems, trialkylaluminum-boron trifluoride-nickel systems and diethylaluminum chloride-nickel systems; lanthanoid rare earth metal catalysts such as triethylaluminum-organic acid neodymium-Lewis acid systems; or organoalkali metal compounds similarly to the S-SBRs. An isoprene rubber polymerized with a Ziegler catalyst is preferred because of its high cis content. Alternatively, an isoprene rubber having an ultrahigh cis content obtained using a lanthanoid rare earth metal catalyst may be used.

The vinyl content of the isoprene rubber is preferably 50 mass% or less, more preferably 40 mass% or less, and still more preferably 30 mass% or less from the viewpoint of improving rolling resistance performance. The lower limit of the vinyl content is not particularly limited. The glass transition temperature varies depending on the vinyl content, but is preferably -20°C or less, and more preferably -30°C or less.

The weight average molecular weight (Mw) of the isoprene rubber is preferably 90,000 to 2,000,000, and more preferably 150,000 to 1,500,000. When the Mw is in the above range, high processability and mechanical strength are obtained.

A part of the isoprene rubber may have a branched structure or polar functional groups introduced by using a polyfunctional modifier, such as a modifier like tin tetrachloride, silicon tetrachloride, an alkoxysilane having an epoxy group in the molecule, or an amino group-containing alkoxysilane as long as the effects of the present invention are not impaired.

In the rubber composition as described above, the content of the modified liquid diene polymer (B) per 100 parts by mass of the solid rubber (A) is preferably 0.1 to 50 parts by mass, more preferably 0.1 to 45 parts by mass, still more preferably 0.5 to 40 parts by mass, particularly preferably 1 to 40 parts by mass, especially preferably 2 to 40 parts by mass, extremely preferably 3 to 35 parts by mass, and further extremely preferably 5 to 30 parts by mass. When the content of the modified liquid diene polymer (B) is within the above range, the dispersion state of other components, especially the filler (C) in the rubber composition is ideal, and the rigidity of the resulting composition and crosslinked product is improved. For example, when the rubber composition is used for a tire or the like, the grip property (wet grip property and/or ice grip property) is improved, and as a result, steering stability is improved. In addition, the rolling resistance performance is also improved. The content of the modified liquid diene polymer (B) per 100 parts by mass of the solid rubber (A) is preferably 5 to 25 parts by mass, more preferably 5 to 20 parts by mass, and still more preferably 10 to 20 parts by mass.

In the rubber composition as described above, the content of the solid rubber (A) is preferably 20 to 90 mass%, more preferably 25 to 85 mass%, and still more preferably 30 to 80 mass% relative to the total amount of the rubber composition. When the content of the solid rubber (A) is within the above range, a rubber composition well balanced in grip property and abrasion resistance is obtained.

In one preferred embodiment of the present invention, the rubber composition includes a filler. Examples of the filler (C) include the fillers described above, for example, carbon black and/or silica.

From the viewpoint of, for example, improving the processability and abrasion resistance of a resulting rubber composition and a crosslinked product thereof, the rubber composition preferably comprises carbon black and/or silica as the filler (C), and more preferably comprises silica.

In a rubber composition according to one preferred embodiment of the present invention, the content of the filler (C) per 100 parts by mass of the solid rubber (A) is preferably 0.5 to 200 parts by mass, more preferably 20 to 180 parts by mass, still more preferably 25 to 150 parts by mass, and further preferably 30 to 150 parts by mass. When the content of the filler (C) is within the above range, processability, rolling resistance performance, mechanical strength, and abrasion resistance are improved. The case in which the content of the filler (C) is equal to or more than the above lower limit, preferably 30 mass% or more is preferable from the viewpoint of the abrasion resistance of the resulting rubber composition, and the case in which the content of the filler (C) is equal to or less than the above upper limit, preferably 150 mass% or less is preferable from the viewpoint of the grip property of the resulting rubber composition. In one preferred embodiment, the content of the filler (C) is preferably 33 to 140 parts by mass, more preferably 35 to 130 parts by mass, still more preferably 40 to 120 parts by mass, further preferably 50 to 110 parts by mass, and extremely preferably 60 to 100 parts by mass.

The amount of the filler other than silica and carbon black in the filler (C) is not particularly limited, and may be, for example, 0 to 120 parts by mass, preferably 0 to 90 parts by mass, more preferably 0 to 80 parts by mass, and still more preferably 0 to 70 parts by mass per 100 parts by mass of the solid rubber (A).

The total mass of the solid rubber (A), the modified liquid diene polymer (B), and the filler (C) comprised in the rubber composition according to one preferred embodiment of the present invention is preferably 10 to 100 mass%, and more preferably 15 to 100 mass% relative to the total amount of the rubber composition.

A rubber composition according to one preferred embodiment may further include a crosslinking agent (D) for crosslinking the rubber. Examples of the crosslinking agent (D) include sulfur, sulfur compounds, oxygen, organic peroxides, phenolic resins, amino resins, quinone and quinone dioxime derivatives, halogen compounds, aldehyde compounds, alcohol compounds, epoxy compounds, metal halides and organometal halides, and silane compounds. Examples of the sulfur compounds include morpholine disulfide and alkylphenol disulfides. Examples of the organic peroxides include cyclohexanone peroxide, methyl acetoacetate peroxide, t-butyl peroxyisobutyrate, t-butyl peroxybenzoate, benzoyl peroxide, lauroyl peroxide, dicumyl peroxide, di-t-butyl peroxide, and 1,3-bis(t-butylperoxyisopropyl) benzene. Such crosslinking agents (D) may be used singly, or two or more of them may be used in combination.

For example, when sulfur, a sulfur compound, or the like is included as the crosslinking agent (D) for crosslinking (vulcanizing) the rubber, the rubber composition may further include a vulcanization accelerator (E). Examples of the vulcanization accelerator (E) include guanidine compounds, sulfenamide compounds, thiazole compounds, thiuram

compounds, thiourea compounds, dithiocarbamic acid compounds, aldehyde-amine compounds, aldehyde-ammonia compounds, imidazoline compounds, and xanthate compounds. Such vulcanization accelerators (E) may be used singly, or two or more of them may be used in combination. The vulcanization accelerator (E) is comprised in an amount of preferably 0.1 to 15 parts by mass, and more preferably 0.1 to 10 parts by mass per 100 parts by mass of the solid rubber (A).

When the rubber composition includes, for example, sulfur, a sulfur compound or the like as the crosslinking agent (D) for crosslinking (vulcanizing) the rubber, the rubber composition may further include a vulcanization aid (F). Examples of the vulcanization aid (F) include fatty acids such as stearic acid, metal oxides such as zinc oxide, and fatty acid metal salts such as zinc stearate. Such vulcanization aids (F) may be used singly, or two or more of them may be used in combination. The amount of the vulcanization aid (F) is preferably 0.1 to 15 parts by mass, and more preferably 1 to 10 parts by mass per 100 parts by mass of the solid rubber (A).

When the rubber composition comprises silica as the filler (C), the rubber composition preferably further comprises a silane coupling agent. Examples of the silane coupling agent include sulfide compounds, mercapto compounds, vinyl compounds, amino compounds, glycidoxy compounds, nitro compounds, and chloro compounds.

Examples of the sulfide compounds include bis(3-triethoxysilylpropyl) tetrasulfide, bis(2-triethoxysilylethyl) tetrasulfide, bis(3-trimethoxysilylpropyl) tetrasulfide, bis(2-trimethoxysilylethyl) tetrasulfide, bis(3-triethoxysilylpropyl) trisulfide, bis(3-trimethoxysilylpropyl) trisulfide, bis(3-triethoxysilylpropyl) disulfide, bis(3-trimethoxysilylpropyl) disulfide, 3-trimethoxysilylpropyl-N,N-dimethylthiocarbamoyl tetrasulfide, 3-triethoxysilylpropyl-N,N-dimethylthiocarbamoyl tetrasulfide, 2-trimethoxysilylethyl-N,N-dimethylthiocarbamoyl tetrasulfide, 3-trimethoxysilylpropyl benzothiazole tetrasulfide, 3-triethoxysilylpropyl benzothiazole tetrasulfide, 3-triethoxysilylpropyl methacrylate monosulfide, 3-trimethoxysilylpropyl methacrylate monosulfide, and 3-octanoylthio-1-propyltriethoxysilane.

Examples of the mercapto compounds include 3-mercaptopropyltrimethoxysilane, 3-mercaptopropyltriethoxysilane, 2-mercaptoethyltrimethoxysilane, and 2-mercaptoethyltriethoxysilane.

Examples of the vinyl compounds include vinyltriethoxysilane and vinyltrimethoxysilane.

Examples of the amino compounds include 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane.

Examples of the glycidoxy compounds include γ-glycidoxypropyltriethoxysilane, γ-glycidoxypropyltrimethoxysilane, γ-glycidoxypropylmethyldiethoxysilane, and γ-glycidoxypropylmethyldimethoxysilane.

Examples of the nitro compounds include 3-nitropropyltrimethoxysilane and 3-nitropropyltriethoxysilane.

Examples of the chloro compounds include 3-chloropropyltrimethoxysilane, 3-chloropropyltriethoxysilane, 2-chloroethyltrimethoxysilane, and 2-chloroethyltriethoxysilane.

Examples of other compounds include octyltriethoxysilane, methyltriethoxysilane, methyltrimethoxysilane, and hexadecyltrimethoxysilane.

Such silane coupling agents may be used singly, or two or more of them may be used in combination. Among such silane coupling agents, bis(3-triethoxysilylpropyl) disulfide, bis(3-triethoxysilylpropyl) tetrasulfide and 3-mercaptopropyltrimethoxysilane are preferable from the viewpoints of a great effect derived from the addition thereof and cost.

The amount of the silane coupling agent is preferably 0.1 to 30 parts by mass, more preferably 0.5 to 20 parts by mass, and still more preferably 1 to 15 parts by mass per 100 parts by mass of the silica. When the content of the silane coupling agent is within the above range, dispersibility, coupling effect, reinforcing property, and abrasion resistance are improved.

The rubber composition according to one preferred embodiment of the present invention comprises at least one resin. As the resin, a synthetic resin or a natural resin may be used. Such resins may be used singly, or two or more of them may be used in combination.

Examples of the synthetic resin include petroleum resins, and an oligomer obtained by polymerizing a raw material including a C5 fraction, a C9 fraction, a purified component of a C5 fraction, a purified component of a C9 fraction, or a mixture of these fractions or purified components can be used. A product prepared by subjecting an oligomer thus obtained to modification, such as hydrogenation can also be used. Examples of the C5 fraction include cyclopentadiene, dicyclopentadiene, isoprene, 1,3-pentadiene, 2-methyl-1-butene, 2-methyl-2-butene, 1-pentene, 2-pentene, and cyclopentene. Examples of the C9 fraction include styrene, allylbenzene, α-methylstyrene, vinyltoluene, β-methylstyrene, and indene. In addition, an alkylphenol resin or a xylene resin can also be used.

As the natural resin, a rosin resin or a terpene resin can be used. The rosin resin is a resin obtained from pine, and the main component thereof is a mixture of abietic acid and an isomer thereof. In addition, those modified by esterification, polymerization, hydrogenation, or the like are also included. Examples of an unmodified rosin resin include tall rosin, gum rosin, and wood rosin. Other examples include polymerized rosin, disproportionated rosin, hydrogenated rosin, maleic acid-modified rosin, fumaric acid-modified rosin, esterified products thereof, and products thereof resulting from modification such as hydrogenation. The terpene resin is an oligomer obtained by polymerizing a raw material comprising a terpene monomer. An oligomer obtained by modifying the oligomer by hydrogenation or the like is also included. Examples of the terpene monomer include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, γ-terpineol, sabinene, paramentadienes, and carenes each having monoterpene, sesquiterpene, diterpene, or the like as a base skeleton. In addition, coumarone monomers such as benzofuran ($C_8H_6O$), vinyl aromatic compounds, phenolic monomers, or the like copolymerizable with the terpene monomer may be comprised, and products obtained by modifying the oligomer by hydrogenation or the like are also included.

The amount of the resin in the rubber composition is preferably 0 to 400 parts by mass, more preferably 0 to 200 parts by mass, and still more preferably 0 to 150 parts by mass per 100 parts by mass of the solid rubber. When the rubber composition comprises a resin, it is possible to impart adhesiveness to the rubber composition, improve processability, or improve slippage of the rubber.

For the purpose of improving processability, fluidity, and the like, the rubber composition may, as necessary, include, as a softener, a process oil such as silicone oils, aromatic oils, TDAEs (treated distilled aromatic extracts), MESs (mild extracted solvates), RAEs (residual aromatic extracts), paraffin oils, and naphthene oils, and a resin component such as coumarone-indene resins as long as the effects of the present invention are not impaired. When the rubber composition comprises the process oil as a softener, the content thereof is preferably less than 50 parts by mass per 100 parts by mass of the solid rubber (A).

The rubber composition may comprise additives as required to attain enhancements in properties such as weather resistance, heat resistance and oxidation resistance as long as the effects of the invention are not impaired. Examples of such additives include antioxidants, waxes, oxidation inhibitors, lubricants, light stabilizers, scorch inhibitors, processing aids, colorants such as pigments and dyes, flame retardants, antistatic agents, matting agents, antiblocking agents, UV absorbers, release agents, foaming agents, antibacterial agents, mildew-proofing agents and perfumes. Examples of the oxidation inhibitors include hindered phenol compounds, phosphorus compounds, lactone compounds and hydroxyl compounds. Examples of the antioxidants include amine-ketone compounds, imidazole compounds, amine compounds, phenolic compounds, sulfur compounds and phosphorus compounds. These additives may be used singly or two or more of them may be used in combination.

(Method for producing rubber composition)

The rubber composition of the present invention may be produced by any methods without limitation as long as the components described above can be mixed uniformly. Examples of the apparatuses to be used for the production of the rubber composition include tangential or intermeshing internal kneaders such as kneader-ruders, Brabender mixers, Banbury mixers and internal mixers, single-screw extruders, twin-screw extruders, mixing rolls, and rollers. The production of the rubber composition can be usually performed at a temperature in the range of 70 to 270°C.

(Crosslinked product)

A crosslinked product can be obtained by crosslinking the rubber composition described above. The conditions under which the rubber composition is crosslinked may be appropriately set according to the intended application and the like of the crosslinked product. When, for example, the rubber composition is crosslinked (vulcanized) in a mold by heating by use of sulfur or a sulfur compound as a crosslinking agent, the crosslinking (vulcanization) may be usually performed at a crosslinking temperature of 120 to 200°C and a pressure of 0.5 to 2.0 MPa.

The rubber composition described above and the crosslinked product of the rubber composition can also be used as at least a part of a tire. In a tire thus obtained, the dispersion state of other components such as the filler (C) is an ideal state (for example, the Payne effect is sufficiently reduced), the tire is superior in rolling resistance performance, and good in abrasion resistance. In addition, the tire obtained from the rubber composition as described above is also superior in grip property (wet grip property and/or ice grip property). Furthermore, bleeding out of the modified liquid diene polymer is also inhibited, and the tire is superior in stability.

Examples of the portions of tires in which the rubber composition and a crosslinked product of the rubber composition can be used include treads (cap treads, undertreads), sidewalls, rubber reinforcing layers (such as liners) for runflat tires, rim cushions, bead fillers, bead insulations, bead apexes, clinch apexes, belts, belt cushions, breakers, breaker cushions, chafers, chafers pads and strip apexes.

Examples of tires in which the rubber composition and the crosslinked product of the rubber composition can be used include pneumatic tires and non-pneumatic tires. In particular, pneumatic tires are preferable.

For example, they can be suitably used as summer tires and a winter tire (studless tires, snow tires, stud tires, etc.). The tires can be used for tires for passenger vehicles, tires for large passenger vehicles, tires for large SUVs, tires for high loads such as trucks or buses, light truck tires, tires for two-wheeled vehicles, runflat tires, tires for a race (high-performance tires), etc.

The rubber composition and a crosslinked product of the rubber composition can be used also for applications other than tires, and can be used as, for example, packing, sheet members, hoses, belts, rubberized fabrics, footwear, and

adhesives.

EXAMPLES

Hereinafter, the present invention will be described in further detail by way of Examples, but the present invention is not limited by the Examples.

The methods for measuring physical property values of unmodified liquid diene polymers and modified liquid diene polymers are as follows.

<Weight average molecular weight, number average molecular weight, and molecular weight distribution>

The weight average molecular weight (Mw), number average molecular weight (Mn), and molecular weight distribution (Mw/Mn) of a modified liquid diene polymer were determined by GPC (gel permeation chromatography) relative to standard polystyrenes. The measurement apparatus and conditions are as follows.

- Apparatus: GPC apparatus "HLC-8320GPC" manufactured by Tosoh Corporation
- Separation column: "TSKgelSuperHZ4000×2" manufactured by Tosoh Corporation
- Eluent: Tetrahydrofuran
- Eluent flow rate: 0.35 mL/min
- Sample concentration: 5 mg/10 mL
- Column temperature: 40°C

<Amount of cis-1,4-bond unit, amount of trans-1,4-bond unit>

A solution prepared by dissolving 30 mg of each unmodified liquid diene polymer in 10 mL of carbon disulfide was measured with a Fourier transform infrared spectrophotometer (FT-IR). From the detected absorption peak absorbance ($A_V$) derived from a 1,2-bond, absorption peak absorbance ($A_C$) derived from a cis-1,4 bond, absorption peak absorbance ($A_T$) derived from a trans-1,4-bond, and the absorption coefficient of Morero, a composition ratio was determined using calculation formula (i).

Calculation formula (i)

cis-1,4-bond (C) ... $1.7455*A_C - 0.0151*A_V$

trans-1,4-bond (T) ... $0.4292*A_T - 0.0129*A_V - 0.0454*A_C$

1,2-bond (V) ... $0.3746*A_V - 0.007*A_C$

Proportion of cis-1,4-bond (%) = $C/(C + V + T)*100$

Proportion of trans-1,4-bond (%) = $T/(C + V + T)*100$

Proportion of 1,2-bond (%) = $V/(C + V + T)*100$

<Average number of contained modifying groups represented by formula (I)>

First, 50 mg of each unmodified liquid diene polymer was dissolved in 1 mL of deuterated chloroform, and $^1$H-NMR was measured with the number of scans of 128 using "AVANCE 400Nanobay" (400 MHz) manufactured by Bruker Corporation (Measurement 1). Next, 50 mg of each modified liquid diene polymer was dissolved in 1 mL of deuterated chloroform, and $^1$H-NMR was measured with the number of scans of 128 using "AVANCE 400Nanobay" (400 MHz) manufactured by Bruker Corporation (Measurement 2).

In the $^1$H-NMR spectrum obtained in Measurement 1, peak integrals of the peak derived from a 1,2-bond and the peak derived from a 1,2-bond and a 1,4-bond were determined. Next, in the $^1$H-NMR spectrum obtained in Measurement 2, the abundance ratio (X, Y, Z) (molar ratio) of a 1,2-bond, a 1,4-bond, and 2-aminoethanethiol was calculated from the integrals of the peak derived from a 1,2-bond, the peak derived from a 1,4-bond, and the peak derived from 2-aminoethanethiol utilizing the peak integrals obtained in Measurement 1.

Assuming the number of monomers constituting the diene polymer from the weight average molecular weight, an

approximate value of the functional group amount in the amine-modified liquid diene polymer was determined from the following equation.

Average number of functional groups per molecule (functional groups/polymer) = the number of monomers * (Z/(X + Y))

<Amount of structural units to which modifying group is bonded, amount of 1,2-bond units having vinyl group>

Based on the molecular weights of the monomers constituting each modified liquid diene polymer and the weight average molecular weight of the modified liquid diene polymer, an approximate value of the number of monomers constituting each modified liquid diene polymer was determined, and the number of each bond unit was roughly calculated. Based on these and the average number of the contained modifying groups, the ratio (mol%) of the structural units comprising the modifying group to the total amount of the structural units derived from butadiene (in the case of the present Examples and Comparative Examples, the total amount of the structural units comprising a 1,4-bond unit, a 1,2-bond unit having a vinyl group, and a modifying group) was calculated. In addition, based on the amount of the 1,2-bond units in the unmodified liquid diene polymer, the ratio (mol%) of the 1,2-bond units having a vinyl group to the total amount of the structural units derived from butadiene in the modified liquid diene polymer was calculated.

<Melt viscosity>

The melt viscosity of an unmodified liquid diene polymer at 38°C was measured with a Brookfield viscometer (manufactured by BROOKFIELD ENGINEERING LABS., INC.).

1. Synthesis of unmodified liquid diene polymer

[Production Example 1: Synthesis of diene polymer 1]

A thoroughly dried 3 L autoclave was purged with nitrogen and was loaded with 955 g of hexane and 21 g of n-butyllithium (17 mass% hexane solution). The temperature was raised to 60°C, and then 770 g of butadiene was successively added under stirring conditions, whereby polymerization was performed. Thereafter, methanol was added to stop the polymerization reaction, affording a polymer solution. Water was added to the resulting polymer solution, and the mixture was stirred, whereby the polymer solution was washed with water. Stirring was terminated, and after confirming that a polymer solution phase and an aqueous phase were separated, the water was separated. The polymer solution after completion of washing was vacuum-dried at 140°C for 3 hours, affording unmodified liquid diene polymer 1 composed of a butadiene homopolymer.

[Production Example 2: Synthesis of diene polymer 2]

A thoroughly dried 3 L autoclave was purged with nitrogen and was loaded with 510 g of cyclohexane and 85 g of n-butyllithium (17 mass% hexane solution). After the temperature was raised to 50°C, 5 g of N,N,N',N'-tetramethylethylenediamine was added, and 1270 g of butadiene was successively added under stirring conditions while the polymerization temperature was controlled to be 50°C, whereby polymerization was performed. Thereafter, methanol was added to stop the polymerization reaction, affording a polymer solution. Water was added to the resulting polymer solution, and the mixture was stirred, whereby the polymer solution was washed with water. Stirring was terminated, and after confirming that a polymer solution phase and an aqueous phase were separated, the water was separated. The polymer solution after completion of washing was vacuum-dried at 70°C for 24 hours, affording unmodified liquid diene polymer 2 composed of a butadiene homopolymer.

[Production Example 3: Synthesis of diene polymer 3]

A thoroughly dried 5 L autoclave was purged with nitrogen and was loaded with 1200 g of hexane and 22.9 g of n-butyllithium (17 mass% hexane solution). 1260 g of butadiene was successively added under stirring conditions while the polymerization temperature was controlled to be 70°C, whereby polymerization was performed. Thereafter, methanol was added to stop the polymerization reaction, affording a polymer solution. Water was added to the resulting polymer solution, and the mixture was stirred, whereby the polymer solution was washed with water. Stirring was terminated, and after confirming that a polymer solution phase and an aqueous phase were separated, the water was separated. The polymer solution after completion of washing was vacuum-dried at 70°C for 24 hours, affording unmodified liquid diene polymer 3 composed of a butadiene homopolymer.

[Production Example 4: Synthesis of diene polymer 4]

A thoroughly dried 10 L autoclave was purged with nitrogen and was loaded with 4520 g of hexane and 31.2 g of n-butyllithium (17 mass% hexane solution). 2970 g of butadiene was successively added under stirring conditions while the polymerization temperature was controlled to be 70°C, whereby polymerization was performed. 300 g of isoprene was further added successively and polymerization was performed. Thereafter, methanol was added to stop the polymerization reaction, affording a polymer solution. Water was added to the resulting polymer solution, and the mixture was stirred, whereby the polymer solution was washed with water. Stirring was terminated, and after confirming that a polymer solution phase and an aqueous phase were separated, the water was separated. The polymer solution after completion of washing was vacuum-dried at 70°C for 24 hours, affording unmodified liquid diene polymer 4 composed of a copolymer of butadiene and isoprene.

The weight average molecular weight (Mw), the number average molecular weight (Mn), the molecular weight distribution (Mw/Mn), the proportion of cis-1,4-bond units and the proportion of trans-1,4-bond units among 1,4-bond units, and the melt viscosity of the unmodified liquid diene polymers 1 to 4 obtained as described above were measured in accordance with the methods described above. The results obtained are shown in Table 1. The amount of the structural unit derived from butadiene in each of the unmodified polymers 1 to 3 was 100 mass% relative to the total amount of each of the polymers. In the unmodified polymer 4, the amount of the structural unit derived from butadiene and the amount of the structural unit derived from isoprene were 90 mass% and 10 mass%, respectively, relative to the total amount of the polymer.

[Table 1]

| | | Monomer | Mw | Mn | Mw/Mn | Proportion (mol%) in 1,4-bond units | | Melt viscosity (Pa·s) |
|---|---|---|---|---|---|---|---|---|
| | | | | | | cis-1,4-bond unit | trans-1,4-bond unit | |
| Polymer | 1 | Butadiene | 28000 | 25500 | 1.1 | 42 | 58 | 30 to 50 |
| | 2 | Butadiene | 4800 | 4600 | 1.05 | 40 | 60 | 4 to 6 |
| | 3 | Butadiene | 45000 | 44000 | 1.02 | 43 | 57 | 200 |
| | 4 | Butadiene /isoprene | 47800 | 46800 | 1,02 | 64 | 36 | 300 |

2. Synthesis of modified liquid diene polymer

[Production Example 5: Synthesis of modified liquid diene polymer 1-1]

A thoroughly dried 1 L volume autoclave was purged with nitrogen and was loaded with 597 g of the unmodified liquid diene polymer 1, and the system was deaerated with nitrogen with stirring at 80°C for 3 hours. 1.5 g of 1,1-bis(t-hexylperoxy)cyclohexane and 5.1 g of 2-aminoethanethiol were added, and the mixture was reacted at 110°C for 8 hours, affording amine-modified liquid diene polymer 1-1.

[Production Example 6: Synthesis of modified liquid diene polymer 1-2]

A thoroughly dried 1 L volume autoclave was purged with nitrogen and was loaded with 605 g of the unmodified liquid diene polymer 1, and the system was deaerated with nitrogen with stirring at 80°C for 3 hours. 1.9 g of 1,1-bis(t-hexylperoxy)cyclohexane and 12.7 g of 2-aminoethanethiol were added, and the mixture was reacted at 110°C for 8 hours. Thereafter, the reaction product was dissolved in 500 g of cyclohexane, and the solution was poured into 3000 g of methanol and reprecipitated, affording amine-modified liquid diene polymer 1-2.

[Production Example 7: Synthesis of modified liquid diene polymer 1-3]

A thoroughly dried 1 L volume autoclave was purged with nitrogen and was loaded with 436 g of the unmodified liquid diene polymer 1 and 187 g of toluene. The mixture was stirred at 40°C to form a homogeneous polymer solution, and then the system was deaerated with nitrogen for 3 hours. 1.6 g of 1,1-bis(t-hexylperoxy)cyclohexane and 10.1 g of 2-aminoethanethiol were added, and the mixture was reacted at 110°C for 8 hours. Thereafter, the reaction solution was poured into 2000 g of methanol and reprecipitated, affording modified liquid diene polymer 1-3.

[Production Example 8: Synthesis of modified liquid diene polymer 2-1]

A thoroughly dried 1 L volume autoclave was purged with nitrogen and was loaded with 607 g of the unmodified liquid diene polymer 2, and the system was deaerated with nitrogen with stirring at 60°C for 3 hours. 0.9 g of 1,1-bis(t-hexylperoxy)cyclohexane and 37.1 g of 2-aminoethanethiol were added, and the mixture was reacted at 110°C for 8 hours. Thereafter, the reaction product was dissolved in 500 g of cyclohexane, and the solution was poured into 3000 g of methanol and reprecipitated, affording modified liquid diene polymer 2-1.

[Production Example 9: Synthesis of modified liquid diene polymer 2-2]

A thoroughly dried 1 L volume autoclave was purged with nitrogen and was loaded with 125 g of the unmodified liquid diene polymer 2 and 500 g of toluene. The mixture was stirred at 40°C to form a homogeneous polymer solution, and then the system was deaerated with nitrogen for 3 hours. 4.2 g of 1,1-bis(t-hexylperoxy)cyclohexane and 17.7 g of 2-aminoethanethiol were added, and the mixture was reacted at 110°C for 8 hours. Thereafter, the reaction solution was poured into 2500 g of methanol and reprecipitated, affording modified liquid diene polymer 2-2.

[Production Example 10: Synthesis of modified liquid diene polymer 3-1]

A thoroughly dried 1 L volume autoclave was purged with nitrogen and was loaded with 601 g of the unmodified liquid diene polymer 3, and the system was deaerated with nitrogen for 3 hours with stirring at 100°C. 1.4 g of 1,1-bis(t-hexylperoxy)cyclohexane and 4.5 g of 2-aminoethanethiol were added, and the mixture was reacted at 110°C for 8 hours. Thereafter, the reaction solution was poured into 2500 g of methanol and reprecipitated, affording modified liquid diene polymer 3-1.

[Production Example 11: Synthesis of modified liquid diene polymer 4-1]

A thoroughly dried 1 L volume autoclave was purged with nitrogen and was loaded with 125 g of the unmodified liquid diene polymer 4 and 594 g of toluene, and the system was deaerated with nitrogen for 3 hours with stirring at 100°C. 1.5 g of 1,1-bis(t-hexylperoxy)cyclohexane and 3.7 g of 2-aminoethanethiol were added, and the mixture was reacted at 110°C for 8 hours. Thereafter, the reaction solution was poured into 2200 g of methanol and reprecipitated, affording modified liquid diene polymer 4-1.

The weight average molecular weight (Mw), the number average molecular weight (Mn), the molecular weight distribution (Mw/Mn), the proportion of a 1,2-bond unit having a vinyl group, the proportion of a cis-1,4-bond unit, the proportion of a trans-1,4-bond unit, the average number of the contained modifying group represented by the formula (1), and the proportion of the structural units having the modifying group represented by the formula (1) of the modified liquid diene polymers 1-1 to 1-3, 2-1 to 2-2, 3-1 and 4-1 produced as described above were measured in accordance with the methods described above. The results obtained are shown in Table 2. In Table 2, the proportion (a) is a proportion (mol%) of each bond unit relative to the total amount of the structural units derived from butadiene of the modified liquid diene polymer, and the proportion (b) is a proportion (mol%) of each bond unit relative to the total amount of the 1,4-bond units of the modified liquid diene polymer. In the structure of the modifying group represented by the formula (1), $R^1 = C_2H_4$ and $R^2 = H$.

[Table 2]

| | | Mw | Mn | Mw/Mn | Proportion (a) | | | | Proportion (b) | | Average number of contained modifying group |
|---|---|---|---|---|---|---|---|---|---|---|---|
| | | | | | cis-1,4-bond unit | trans-1,4-bond unit | 1,2-Bond unit having vinyl group | Structural unit containing modifying group | cis-1,4-bond unit | trans-1,4-bond unit | |
| Amine-modified diene polymer | 1-1 | 24,000 | 20,900 | 1.15 | 36.5 | 51.4 | 9.7 | 2.4 | 42 | 58 | 0.8 |
| | 1-2 | 22,100 | 18,900 | 1.17 | 36.5 | 51.4 | 9.3 | 2.8 | 42 | 58 | 1.8 |
| | 1-3 | 21,200 | 17,700 | 1.20 | 36.5 | 51.4 | 9.0 | 3.1 | 42 | 58 | 2.4 |
| | 2-1 | 5,500 | 5,340 | 1.03 | 14.0 | 21.0 | 61.0 | 4.0 | 40 | 60 | 1.7 |
| | 2-2 | 5,600 | 5,190 | 1.08 | 14.0 | 21.0 | 56.0 | 9.0 | 40 | 60 | 4.1 |

(continued)

| | | Mw | Mn | Mw/Mn | Proportion (a) | | | | Proportion (b) | | Average number of contained modifying group |
|---|---|---|---|---|---|---|---|---|---|---|---|
| | | | | | cis-1,4-bond unit | trans-1,4-bond unit | 1,2-Bond unit having vinyl group | Structural unit containing modifying group | cis-1,4-bond unit | trans-1,4-bond unit | |
| | 3-1 | 45,300 | 44,400 | 1.02 | 39.0 | 52.0 | 9.0 | 0.4 | 43 | 57 | 2 |
| | 4-1 | 48,000 | 46,800 | 1.03 | 55.0 | 31.0 | 14.0 | 0.3 | 64 | 36 | 2 |

<Solid rubber>

Solution polymerized styrene butadiene rubber: HPR355 (manufactured by ENEOS Materials Corporation, with alkoxysilyl group introduced at molecular terminal, styrene content: 28 mass%, vinyl content: 56 mass%.)

STR20: Natural rubber produced in Thailand

Butadiene rubber: BR01 (manufactured by ENEOS Materials Corporation, Mw: 550,000, cis content: 95 mass%)

<Silane coupling agent>

Silica: ULTRASIL7000 GR (manufactured by Evonik Japan, wet silica, average particle size: 14 nm)

Silane coupling agent: Si-75 (manufactured by Evonik Japan)

<Carbon black>

N220: DIABLACK I (manufactured by Mitsubishi Chemical Corporation, average particle size: 23 nm)

<Plasticizer>

TDAE: VivaTec500 (manufactured by H&R)

<Other components>

Zinc oxide: ZnO (manufactured by Sakai Chemical Industry Co., Ltd.)
Stearic acid: LUNAC S-20 (manufactured by Kao Corporation)
WAX: SUNTIGHT S (manufactured by Seiko Chemical Co., Ltd.)
Antioxidant: NORAC6C (manufactured by Ouchi Shinko Chemical Industrial Co., Ltd.)
Vulcanizing agent: Insoluble sulfur MUCRON OT-20 (manufactured by Shikoku Chemicals Corporation)
Vulcanization accelerator 1: NOCCELER CZ (manufactured by Ouchi Shinko Chemical Industrial Co., Ltd.)
Vulcanization accelerator 2: NOCCELER D (manufactured by Ouchi Shinko Chemical Industrial Co., Ltd.)

[Examples 1 to 17 and Comparative Examples 1 to 9: Production of rubber composition]

A solid rubber, a polymer, a filler, a plasticizer, a silane coupling agent, zinc oxide, stearic acid, a wax and an antioxidant were added according to the compounding ratios (parts by mass) given in Tables 3, 4, and 5 into an internal Banbury mixer and were kneaded together for 6 to 8 minutes from a start temperature of 60°C to a resin temperature of 145°C to 160°C. Thereafter, the kneaded mixture was taken out from the mixer and was cooled to room temperature. Next,

the mixture was placed into the internal Banbury mixer again, and was kneaded for 4 to 6 minutes from a start temperature of 90°C to a resin temperature of 150°C. Thereafter, the kneaded mixture was taken out from the mixer and was cooled to room temperature.

The resulting mixture was further placed in the Banbury mixer, a vulcanizing agent and a vulcanization accelerator were added, and the mixture was kneaded from a start temperature of 50°C to an attainment temperature of 75 to 95°C for 75 seconds, affording a rubber composition.

In addition, the resulting rubber composition was subjected to press forming (at 150 to 170°C for 30 to 50 minutes) to give a vulcanized rubber sheet (2 mm in thickness), and physical properties of the vulcanized rubber sheet were evaluated in accordance with the following methods. The measurement methods for the respective evaluations are as follows. The evaluation results obtained are shown in Tables 3, 4, and 5.

<Rubber hardness>

A test piece having a length of 40 mm and a width of 5 mm was cut out from a vulcanized rubber sheet obtained by press forming the rubber composition prepared in each of Examples and Comparative Examples, and the hardness was measured with a type A hardness meter with reference to JIS K6253. To confirm the effect of improving rubber hardness by a modified liquid diene polymer, relative values of Examples 1 to 2 based on the value of Comparative Example 1 taken as 100, and similarly, Examples 3 to 4 based on Comparative Example 2, Examples 5 to 7 based on Comparative Example 3, Examples 8 to 9 based on Comparative Example 4, Examples 10 to 12 based on Comparative Example 5, Examples 13 to 14 based on Comparative Example 6, Example 15 based on Comparative Example 7, Example 16 based on Comparative Example 8, and Example 17 based on Comparative Example 9 are given in Tables 3, 4, and 5 as rubber hardness. The higher the value is, the higher the hardness of the rubber composition is, indicating that the hardness has been improved.

<Bleeding-out inhibition effect>

Three circular test pieces having Φ32 mm were punched out from a vulcanized rubber sheet obtained by press forming the rubber composition prepared in each of Examples and Comparative Examples, and the weight (m1) of each test piece was measured. A sufficient volume of toluene in which the test pieces were completely soaked was prepared, and the test pieces were immersed at room temperature for 48 hours. Thereafter, the test pieces were taken out and dried in a vacuum dryer at 80°C for 12 hours, and the weight (m2) of each of the dried test pieces was measured. The obtained weight measured values (m1, m2) were substituted into calculation formula (ii), and an extraction ratio was calculated.

Calculation formula (ii):

$$\text{Extraction ratio (\%)} = (m1 - m2)/m1*100$$

To confirm the effect of bleeding-out inhibition by a modified liquid diene polymer, the reciprocals of the extraction ratios in Examples and Comparative Examples were calculated. Relative values of the reciprocals of the extraction ratios of Examples 1 to 2 based on the reciprocal of the extraction ratio of Comparative Example 1 taken as 100, and similarly, Examples 3 to 4 based on Comparative Example 2, Examples 5 to 7 based on Comparative Example 3, Examples 8 to 9 based on Comparative Example 4, Examples 10 to 12 based on Comparative Example 5, Examples 13 to 14 based on Comparative Example 6, Example 15 based on Comparative Example 7, Example 16 based on Comparative Example 8, and Example 17 based on Comparative Example 9 are given in Tables 3, 4, and 5 as bleeding-out inhibition effect. The higher the numerical value is, the smaller the amount of the extract is, and the higher the bleeding-out inhibition effect is.

[Table 3]

| | | | Comparative Example 1 | Example 1 | Example 2 | Comparative Example 2 | Example 3 | Example 4 | Comparative Example 3 | Example 5 | Example 6 | Example 7 | Comparative Example 4 | Example 8 | Example 9 |
|---|---|---|---|---|---|---|---|---|---|---|---|---|---|---|---|
| Solid rubber (A) | | HPR355 | 40 | 40 | 40 | 40 | 40 | 40 | 40 | 40 | 40 | 40 | 40 | 40 | 40 |
| | | STR20 | 30 | 30 | 30 | 30 | 30 | 30 | 30 | 30 | 30 | 30 | 30 | 30 | 30 |
| | | BR01 | 30 | 30 | 30 | 30 | 30 | 30 | 30 | 30 | 30 | 30 | 30 | 30 | 30 |
| Filler (B) | Silica | 7000GR | 90 | 90 | 90 | 90 | 90 | 90 | 45 | 45 | 45 | 45 | 45 | 45 | 45 |
| | Carbon black | N220 | 0 | 0 | 0 | 0 | 0 | 0 | 45 | 45 | 45 | 45 | 45 | 45 | 45 |
| Plasticizer | | TDAE | 15 | 15 | 15 | 15 | 15 | 15 | 15 | 15 | 15 | 15 | 15 | 15 | 15 |
| Unmodified liquid diene polymer | | Diene polymer 1 | 15 | | | | | | 15 | | | | | | |
| | | Diene polymer 2 | | | | 15 | | | | | | | 15 | | |
| Modified liquid diene polymer (B) | | 1-1 | | | | | | | | | | 15 | | | |
| | | 1-2 | | | 15 | | | | | | 15 | | | | |
| | | 1-3 | | 15 | | | | | | 15 | | | | | |
| | | 2-1 | | | | | | 15 | | | | | | | 15 |
| | | 2-2 | | | | | 15 | | | | | | | 15 | |
| Silane coupling agent | | Si75 | 7.2 | 7.2 | 7.2 | 7.2 | 7.2 | 7.2 | 3.6 | 3.6 | 3.6 | 3.6 | 3.6 | 3.6 | 3.6 |
| Zinc oxide | | ZnO | 2.0 | 2.0 | 2.0 | 2.0 | 2.0 | 2.0 | 2.0 | 2.0 | 2.0 | 2.0 | 2.0 | 2.0 | 2.0 |
| Stearic acid | | St-acid | 2.0 | 2.0 | 2.0 | 2.0 | 2.0 | 2.0 | 2.0 | 2.0 | 2.0 | 2.0 | 2.0 | 2.0 | 2.0 |
| WAX | | wax | 1.0 | 1.0 | 1.0 | 1.0 | 1.0 | 1.0 | 1.0 | 1.0 | 1.0 | 1.0 | 1.0 | 1.0 | 1.0 |
| Antioxidant | | Nocrac 6C | 2.0 | 2.0 | 2.0 | 2.0 | 2.0 | 2.0 | 2.0 | 2.0 | 2.0 | 2.0 | 2.0 | 2.0 | 2.0 |
| Vulcanizing agent | | MUCRON OT-20 | 2.75 | 2.75 | 2.75 | 2.75 | 2.75 | 2.75 | 2.75 | 2.75 | 2.75 | 2.75 | 2.75 | 2.75 | 2.75 |
| Vulcanization accelerator 1 | | Nocceler CZ | 1.6 | 1.6 | 1.6 | 1.6 | 1.6 | 1.6 | 1.6 | 1.6 | 1.6 | 1.6 | 1.6 | 1.6 | 1.6 |
| Vulcanization accelerator 2 | | Nocceler D | 0.2 | 0.2 | 0.2 | 0.2 | 0.2 | 0.2 | 0.2 | 0.2 | 0.2 | 0.2 | 0.2 | 0.2 | 0.2 |
| Total | | | 238.8 | 238.8 | 238.8 | 238.8 | 238.8 | 238.8 | 235.2 | 235.2 | 235.2 | 235.2 | 235.2 | 235.2 | 235.2 |

(continued)

| | | Comparative Example 1 | Example 1 | Example 2 | Comparative Example 2 | Example 3 | Example 4 | Comparative Example 3 | Example 5 | Example 6 | Example 7 | Comparative Example 4 | Example 8 | Example 9 |
|---|---|---|---|---|---|---|---|---|---|---|---|---|---|---|
| Measurement results | Rubber hardness | 100 | 107 | 100 | 100 | 142 | 115 | 100 | 111 | 105 | 104 | 100 | 130 | 112 |
| | Bleeding-out inhibition effect | 100 | 130 | 126 | 100 | 153 | 139 | 100 | 126 | 122 | 107 | 100 | 153 | 135 |

[Table 4]

| | | | Comparative Example 5 | Example 10 | Example 11 | Example 12 | Comparative Example 6 | Example 13 | Example 14 |
|---|---|---|---|---|---|---|---|---|---|
| Solid rubber (A) | | HPR355 | 40 | 40 | 40 | 40 | 40 | 40 | 40 |
| | | STR20 | 30 | 30 | 30 | 30 | 30 | 30 | 30 |
| | | BR01 | 30 | 30 | 30 | 30 | 30 | 30 | 30 |
| Filler (B) | Silica | 7000GR | 0 | 0 | 0 | 0 | 0 | 0 | 0 |
| | Carbon black | N220 | 90 | 90 | 90 | 90 | 90 | 90 | 90 |
| Plasticizer | | TDAE | 15 | 15 | 15 | 15 | 15 | 15 | 15 |
| Unmodified liquid diene polymer | | Diene polymer 1 | 15 | | | | | | |
| | | Diene polymer 2 | | | | | 15 | | |
| Modified liquid diene polymer (B) | | 1-1 | | | | 15 | | | |
| | | 1-2 | | | 15 | | | | |
| | | 1-3 | | 15 | | | | | |
| | | 2-1 | | | | | | | 15 |
| | | 2-2 | | | | | | 15 | |
| Silane coupling agent | | Si75 | 0 | 0 | 0 | 0 | 0 | 0 | 0 |
| Zinc oxide | | ZnO | 2.0 | 2.0 | 2.0 | 2.0 | 2.0 | 2.0 | 2.0 |
| Stearic acid | | St-acid | 2.0 | 2.0 | 2.0 | 2.0 | 2.0 | 2.0 | 2.0 |
| WAX | | wax | 1.0 | 1.0 | 1.0 | 1.0 | 1.0 | 1.0 | 1.0 |
| Antioxidant | | Nocrac 6C | 2.0 | 2.0 | 2.0 | 2.0 | 2.0 | 2.0 | 2.0 |
| Vulcanizing agent | | MUCRON OT-20 | 2.75 | 2.75 | 2.75 | 2.75 | 2.75 | 2.75 | 2.75 |
| Vulcanization accelerator 1 | | Nocceler CZ | 1.6 | 1.6 | 1.6 | 1.6 | 1.6 | 1.6 | 1.6 |
| Vulcanization accelerator 2 | | Nocceler D | 0.2 | 0.2 | 0.2 | 0.2 | 0.2 | 0.2 | 0.2 |
| Total | | | 231.6 | 231.6 | 231.6 | 231.6 | 231.6 | 231.6 | 231.6 |
| Measurement results | | Rubber hardness | 100 | 103 | 102 | 102 | 100 | 120 | 108 |
| | | Bleeding-out inhibition effect | 100 | 112 | 112 | 104 | 100 | 151 | 136 |

[Table 5]

| | | | Comparative Example 7 | Example 15 | Comparative Example 8 | Example 16 | Comparative Example 9 | Example 17 |
|---|---|---|---|---|---|---|---|---|
| Solid rubber (A) | | HPR355 | 40 | 40 | 40 | 40 | 40 | 40 |
| | | STR20 | 30 | 30 | 30 | 30 | 30 | 30 |
| | | BR01 | 30 | 30 | 30 | 30 | 30 | 30 |
| Filler (B) | Silica | 7000GR | 120 | 120 | | | | |
| | Carbon black | N330 | 10 | 10 | 90 | 90 | 90 | 90 |
| Plasticizer | | TDAE | 45 | 45 | 15 | 15 | 15 | 15 |
| Unmodified liquid diene polymer | | Diene polymer 2 | 15 | | | | | |
| | | Diene polymer 3 | | | 15 | | | |
| | | Diene polymer 4 | | | | | 15 | |
| Modified liquid diene polymer (B) | | Amine-modified diene polymer 2-1 | | 15 | | | | |
| | | Amine-modified diene polymer 3-1 | | | | 15 | | |
| | | Amine-modified diene polymer 4-1 | | | | | | 15 |
| Silane coupling agent | | Si75 | 9.6 | 9.6 | | | | |
| Zinc oxide | | ZnO | 2.0 | 2.0 | 2.0 | 2.0 | 2.0 | 2.0 |
| Stearic acid | | St-acid | 2.0 | 2.0 | 2.0 | 2.0 | 2.0 | 2.0 |
| WAX | | wax | 1.0 | 1.0 | 1.0 | 1.0 | 1.0 | 1.0 |
| Antioxidant | | 6C | 2.0 | 2.0 | 2.0 | 2.0 | 2.0 | 2.0 |
| Vulcanizing agent | | MUCRON OT-20 | 2.75 | 2.75 | 2.8 | 2.8 | 2.8 | 2.8 |
| Vulcanization accelerator 1 | | Nocceler CZ | 2.0 | 2.0 | 1.2 | 1.2 | 1.2 | 1.2 |
| Vulcanization accelerator 2 | | Nocceler D | 0.5 | 0.5 | 0.2 | 0.2 | 0.2 | 0.2 |
| Total | | | 311.9 | 311.9 | 231.2 | 231.2 | 231.2 | 231.2 |
| Measurement results | | Rubber hardness | 100 | 126 | 100 | 103 | 100 | 103 |
| | | Bleeding-out inhibition effect | 100 | 119 | 100 | 115 | 100 | 107 |

<Dispersibility evaluation>

A vulcanized rubber sheet obtained by press forming the rubber composition prepared in each of Comparative Example 2 and Example 3 was superimposed on a paper sheet with black characters printed in a state in which the pressed surface of the obtained flat plate-shaped rubber sheet was up, and photographed with a camera. The captured image is shown in Fig. 1. Whether or not printed characters were visually recognized in the image was evaluated according to the following criteria. The higher the visibility of characters is, the higher the transparency of the rubber sheet is, indicating that the dispersibility of components such as the filler comprised in the rubber composition has been improved. The evaluation results were × (poor) in Comparative Example 2 and ◦ (good) in Example 3.

(Evaluation criteria)

◦ Printed characters can be visually recognized.
× Printed characters cannot be visually recognized.

As shown in Tables 3, 4, and 5, the rubber compositions in which the polymers of the present invention were added exhibited higher hardness as compared with rubber compositions comprising a diene polymer having a similar molecular weight and comprising a similar amount of filler. The fact that the rubber hardness is high is understood to be because the polymer of the present invention improves the dispersibility of other components comprised in the rubber composition such as fillers. Also from the results in Fig. 1, it is understood that the dispersibility of other components has been improved in the rubber composition to which the polymer of the present invention is added. In addition, as shown in Tables 3, 4, and 5, the polymers of the present invention had the dispersibility improving effect as described above and also had the bleeding-out inhibition effect.

**Claims**

1. A modified liquid diene polymer comprising a structural unit derived from butadiene, wherein

the modified liquid diene polymer has a weight average molecular weight of 4,000 to 150,000,
has a modifying group represented by formula (I):

[Chem. 1]

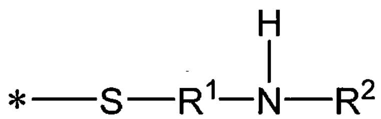

(I)

wherein
$R^1$ represents an alkylene group having 1 to 10 carbon atoms or a phenylene group,
$R^2$ represents a hydrogen atom or an alkyl group having 1 to 2 carbon atoms, and
* represents a bond,
an amount of the structural unit derived from butadiene is 20 to 100 mass% relative to a total amount of the modified liquid diene polymer, and an amount of a 1,2-bond unit having a vinyl group is 0 to 70 mol% relative to a total amount of the structural unit derived from butadiene.

2. The modified liquid diene polymer according to claim 1, wherein an average number of the modifying group represented by the formula (I) is 0.5 to 10 per molecule of the modified liquid diene polymer.

3. The modified liquid diene polymer according to claim 1 or 2, wherein the modified liquid diene polymer has no hydroxy group at an end thereof.

4. The modified liquid diene polymer according to any one of claims 1 to 3, wherein an amount of a cis-1,4-bond unit relative to a total amount of 1,4-bond units in the structural unit derived from butadiene is 20 to 60 mol%.

5. The modified liquid diene polymer according to any one of claims 1 to 4, wherein an amount of a trans-1,4-bond unit relative to a total amount of 1,4-bond units in the structural unit derived from butadiene is 30 to 80 mol%.

6. The modified liquid diene polymer according to any one of claims 1 to 5, wherein the modified liquid diene polymer has a molecular weight distribution of 1.0 to 20.0.

7. An additive for rubber, the additive comprising the modified liquid diene polymer according to any one of claims 1 to 6.

8. The additive for rubber according to claim 7, the additive further comprising at least one selected from the group consisting of a plasticizer, an oxidation inhibitor, a filler, and a colorant.

9. The additive for rubber according to claim 7 or 8, the additive being an additive for a solid rubber.

[FIG. 1]

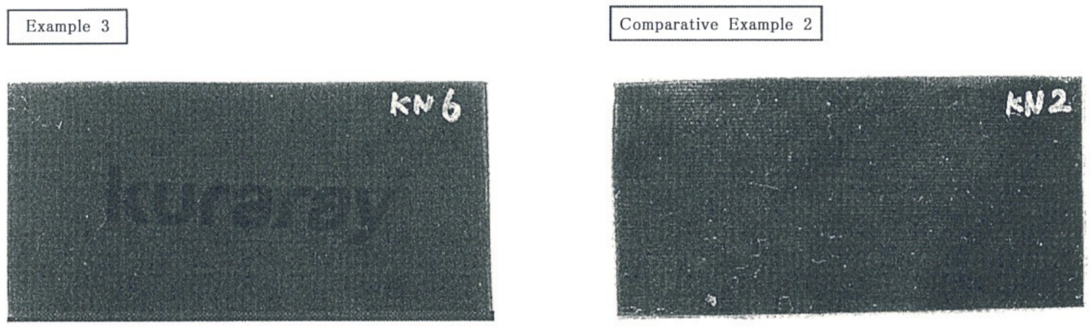

**INTERNATIONAL SEARCH REPORT**

International application No.
**PCT/JP2024/020400**

**A. CLASSIFICATION OF SUBJECT MATTER**

***C08C 19/20***(2006.01)i; ***C08F 8/34***(2006.01)i; ***C08F 36/06***(2006.01)i; ***C08L 9/00***(2006.01)i; ***C08L 47/00***(2006.01)i
FI: C08C19/20; C08L9/00; C08L47/00; C08F36/06; C08F8/34

According to International Patent Classification (IPC) or to both national classification and IPC

**B. FIELDS SEARCHED**

Minimum documentation searched (classification system followed by classification symbols)

C08C19/20; C08F8/34; C08F36/06; C08L9/00; C08L47/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 59-024763 A (NIPPON SODA CO., LTD.) 08 February 1984 (1984-02-08)<br>claims, page 2, lower left column, lines 5-14, page 6, upper right column, line 1 - lower right column, line 3, examples | 1-6<br>1-9 |
| X<br>Y | JP 54-123144 A (ZEON CORPORATION) 25 September 1979 (1979-09-25)<br>claims, page 2, upper right column, lines 7-11, page 2, upper right column, line 19 - page 3, upper right column, line 2, examples | 1-6<br>1-9 |
| Y | JP 2020-125456 A (HANKOOK TIRE & TECH CO., LTD.) 20 August 2020 (2020-08-20)<br>claims, paragraphs [0006]-[0007], [0029], [0100]-[0101], [0106], examples | 1-9 |
| A | JP 2005-220224 A (FUJI PHOTO FILM CO., LTD.) 18 August 2005 (2005-08-18)<br>entire text | 1-9 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 June 2024** | **09 July 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

INTERNATIONAL SEARCH REPORT

International application No.
**PCT/JP2024/020400**

**C. DOCUMENTS CONSIDERED TO BE RELEVANT**

| Category* | Citation of document, with indication, where appropriate, of the relevant passages | Relevant to claim No. |
|---|---|---|
| A | JP 2019-500471 A (BRIDGESTONE CORPORATION) 10 January 2019 (2019-01-10) entire text | 1-9 |
| A | JP 2017-137412 A (TOSOH CORP.) 10 August 2017 (2017-08-10) entire text | 1-9 |

Form PCT/ISA/210 (second sheet) (July 2022)

**INTERNATIONAL SEARCH REPORT**
**Information on patent family members**

International application No.
**PCT/JP2024/020400**

| Patent document cited in search report | Publication date (day/month/year) | Patent family member(s) | Publication date (day/month/year) |
|---|---|---|---|
| JP 59-024763 A | 08 February 1984 | (Family: none) | |
| JP 54-123144 A | 25 September 1979 | (Family: none) | |
| JP 2020-125456 A | 20 August 2020 | US 2020/0248051 A1<br>claims, paragraphs [0007]-[0008], [0034], examples<br>EP 3689636 A1<br>KR 10-2020-0095715 A<br>CN 111518509 A | |
| JP 2005-220224 A | 18 August 2005 | (Family: none) | |
| JP 2019-500471 A | 10 January 2019 | US 2018/0362695 A1<br>entire text<br>WO 2017/117325 A1<br>EP 3397666 A1<br>CN 108473635 A | |
| JP 2017-137412 A | 10 August 2017 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000344949 A
- JP 2013249359 A
- WO 2019172185 A
- JP 2011132298 A